(19) Europäisches Patentamt / European Patent Office / Office européen des brevets

(11) **EP 3 943 264 B1**

(12) **EUROPÄISCHE PATENTSCHRIFT**

(45) Veröffentlichungstag und Bekanntmachung des Hinweises auf die Patenterteilung:
**16.11.2022   Patentblatt 2022/46**

(21) Anmeldenummer: **20187041.7**

(22) Anmeldetag: **21.07.2020**

(51) Internationale Patentklassifikation (IPC):
**B27F 7/05** *(2006.01)*     **B21J 15/02** *(2006.01)*

(52) Gemeinsame Patentklassifikation (CPC):
**B27F 7/05; B21J 15/025; B21J 15/18; B21J 15/20; B21J 15/26; B21J 15/28**

(54) **BOLZENSETZVERFAHREN EINES NAGELFÖRMIGEN BOLZENS SOWIE EIN SETZGERÄT MIT EINER ELEKTRONISCHEN STEUEREINHEIT ZUR UMSETZUNG DES BOLZENSETZVERFAHRENS**

STUD SETTING METHOD OF A NAIL-SHAPED BOLT AS WELL AS A SETTING TOOL WITH AN ELECTRONIC CONTROL UNIT FOR IMPLEMENTING THE STUD REPLACEMENT METHOD

PROCÉDÉ DE POSE DE BOULON D'UN BOULON EN FORME DE CLOU, AINSI QU'APPAREIL DE POSE DOTÉ D'UNE UNITÉ DE COMMANDE ÉLECTRONIQUE PERMETTANT LA MISE EN  UVRE DU PROCÉDÉ DE POSE D'UN BOULON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.01.2022   Patentblatt 2022/04**

(73) Patentinhaber: **Böllhoff Verbindungstechnik GmbH**
**33649 Bielefeld (DE)**

(72) Erfinder:
- **REHLING, Stefan**
  **31675 Bückeburg (DE)**
- **KOLAC, Adnan**
  **33647 Bielefeld (DE)**

(74) Vertreter: **HWP Intellectual Property**
**Ridlerstraße 35**
**80339 München (DE)**

(56) Entgegenhaltungen:
WO-A2-2019/158402     DE-A1-102014 007 553
DE-A1-102015 005 759     DE-A1-102016 005 850

EP 3 943 264 B1

**Beschreibung**

1. Gebiet der Erfindung

Die vorliegende Erfindung betrifft ein Bolzensetzverfahren eines nagelförmigen Bolzens mit einem Kopf und einem sich davon erstreckenden verjüngend auslaufenden Schaft in mindestens ein Bauteil, vorzugsweise in einen Stapel aus mindestens zwei übereinander angeordneten Bauteilen, aus Metall und/oder Kunststoff, bei dem der Bolzen annähernd drehungsfrei mit einer geradlinigen Setzbewegung zumindest zweistufig in das mindestens eine Bauteil gesetzt wird. Zudem umfasst vorliegende Erfindung ein Setzgerät, mit dem annähernd drehungsfrei der nagelförmige Bolzen in einer geradlinigen Setzbewegung in das mindestens eine Bauteil oder in den Stapel der mindestens zwei übereinander angeordneten Bauteile gesetzt wird. Das Setzgerät umfasst eine elektronische Steuereinheit, die angepasst ist, um das erfindungsgemäße Bolzensetzverfahren zu realisieren.

2. Hintergrund der Erfindung

Zum Verbinden von mindestens zwei in einem Stapel übereinander angeordneten Bauteilen, die beispielsweise aus Metall und/oder Kunststoff bestehen, sind verschiedene Verfahren im Stand der Technik bekannt. Beim sogenannten Fließformschrauben wird ein schraubenähnlicher Bolzen in hoher Drehzahl um seine Längsachse gedreht und gleichzeitig durch eine lineare Setzbewegung in die Bauteile gesetzt. Die Rotation um die Längsachse des schraubenähnlichen Bolzens führt zu einer Aufweichung des Bauteilmaterials. Nachdem der schraubenähnliche Bolzen in das aufgeweichte Material gesetzt worden ist, kühlt das aufgeweichte Material ab und nimmt eine durch die äußere Gewindeform des Bolzens vorgegebene Form an. Bei diesem Verfahren, welches eine Kombination aus einer Drehbewegung und einer geradlinigen Setzbewegung verwendet, werden Fügegeschwindigkeiten von bis zu 40 m/s erreicht.

Ein anders ausgerichtetes Setzverfahren fügt nagelähnliche Bolzen durch eine annähernd drehungsfreie geradlinige Setzbewegung in einen Stapel aus übereinander angeordneten Bauteilen. Auch diese Bauteile können aus Metall und/oder Kunststoff bestehen. Die nagelähnlichen Bolzen werden beispielsweise mithilfe eines pneumatisch betriebenen Setzgeräts in die Bauteile eingeschossen, so dass Fügegeschwindigkeiten im zweistelligen Bereich erzielt werden. Zwar sind bei diesem Bolzensetzverfahren die Verbindungsqualität gut und die Taktzeiten kurz, jedoch ist diese Art des Bolzensetzens mit einer teilweise unerwünschten Lärmbelästigung verbunden.

Auch in der Bauindustrie gibt es ähnlich ausgestaltete Bolzensetzverfahren. Hier werden häufig nagelähnliche Verbindungsbolzen mit einem pulverkraftgetriebenen Setzgerät in Mauerwerk oder andere Materialien eingeschossen, um unterschiedliche Verbindungen zu erzielen. Auch hier werden hohe Fügegeschwindigkeiten erzielt, die geringe Taktzeiten des Fügevorgangs bei hoher Lärmbelästigung nach sich ziehen.

Die Verwendung hoher Fügegeschwindigkeiten zum effektiven Setzen von Bolzen hat ebenfalls zur Folge, dass der jeweilige Bolzen mithilfe eines Antriebs auf die erforderliche Fügegeschwindigkeit gebracht werden muss. Diese hohen Fügegeschwindigkeiten, die neben einem verlässlichen Setzen des Bolzens in die Bauteile auch eine verlässliche Verbindungsqualität gewährleisten, führen gleichzeitig zu relativ hohen Reaktionskräften auf einen das Setzgerät tragenden Roboter oder eine entsprechende Zustell- oder Führungsvorrichtung. Gerade im Hinblick auf zu verwendende Roboter in Kombination mit einem Setzgerät ist eine hohe Stabilitätsklassifikation des Roboters teuer und beeinflusst die Kosten beispielsweise einer Produktionsstrecke im Fahrzeugbau. Daher ist es wünschenswert, die effektiven Setzgeräte und die damit verbundene Verbindungsqualität auch mit günstigeren Industrierobotern betreiben zu können. Denn die bisher bekannten Setzgeräte und die damit umgesetzten Fügeverfahren sind aufgrund der damit verbundenen Reaktionskräfte nicht unverändert auf Industrieroboter niedrigerer Klassifikationen übertragbar.

Ein Verfahren zum Verbinden von wenigstens zwei Bauteilen sowie eine Vorrichtung zum Durchführen eines solchen Verfahrens sind in DE 10 2014 007 553 A1 beschrieben. Bei dem Verfahren zum Verbinden eines ersten Bauteils mit wenigstens einem zweiten Bauteil mittels zumindest eines Fügeelements, welches an einer Fügestelle in die Bauteile eingebracht wird, wird das Fügeelement mit einer Geschwindigkeit von weniger als fünf Metern pro Sekunde in die Bauteile eingedrückt.

Im Hinblick auf die oben genannten verschiedenen Nachteile gerade von Setzverfahren und Setzgeräten, bei denen ein nagelförmiger Bolzen annähernd drehungsfrei mit einer geradlinigen Setzbewegung in mehrere übereinander angeordnete Bauteile gesetzt wird, ist es die Aufgabe vorliegender Erfindung, ein in seiner Effektivität verbessertes Bolzensetzverfahren und ein daran angepasstes Setzgerät vorzuschlagen, welches die obigen Nachteile überwindet oder zumindest verringert.

3. Zusammenfassung der Erfindung

Die obige Aufgabe wird durch ein Bolzensetzverfahren eines nagelförmigen Bolzens zum annähernd drehungsfreien geradlinigen Setzen des Bolzens in mindestens ein Bauteil, vorzugsweise mindestens zwei übereinander angeordnete Bauteile, gemäß dem unabhängigen Patentanspruch 1 gelöst.

Zudem offenbart vorliegende Erfindung ein Setzgerät in Kombination mit einer elektronischen Steuereinheit gemäß dem unabhängigen Patentanspruch 9, so dass die oben genannten erfindungsgemäßen Bolzensetzverfahren mithilfe des Setzgeräts ausführbar sind. Vorteilhafte Ausgestaltungen und Weiterentwicklungen der genannten Bolzensetzverfahren sowie des Setzgeräts ergeben sich aus den abhängigen Patentansprüchen, der folgenden Beschreibung sowie der begleitenden Zeichnungen.

Das erfindungsgemäße Bolzensetzverfahren betrifft das Setzen eines nagelförmigen Bolzens mit einem Kopf und einem sich davon erstreckenden verjüngend auslaufenden Schaft in mindestens ein Bauteil, vorzugsweise einen Stapel aus mindestens zwei übereinander angeordneten Bauteilen, aus Metall und/oder Kunststoff, bei dem der Bolzen annähernd drehungsfrei mit einer geradlinigen Setzbewegung zumindest zweistufig in die Bauteile gesetzt wird. Das Bolzensetzverfahren weist die folgenden Schritte auf: Fügen des Bolzens in das mindestens eine Bauteil mit einem Verformungsschlag, bei dem der Bolzen eine erste Fügegeschwindigkeit von ≤4 m/s erreicht und der Schaft mit einem Bereich maximalen Durchmessers bezogen auf eine Schaftlänge das mindestens eine Bauteil vollständig durchdringt, ohne dass eine Unterseite des Kopfes auf dem mindestens einen Bauteil, insbesondere einem kopfzugewandten Bauteil, aufliegt, und nach dem Verformungsschlag Eintreiben des Bolzens in die Bauteile bis zu einer Kopfauflage der Unterseite des Kopfes auf dem mindestens einen Bauteil durch mindestens einen Reibungsschlag, mit dem ein Reibschluss zwischen dem Schaft und den Bauteilen überwunden wird und bei dem der Bolzen eine zweite Fügegeschwindigkeit kleiner als die erste Fügegeschwindigkeit erreicht.

Das erfindungsgemäße Bolzensetzverfahren baut auf bekannte Bolzensetzverfahren auf, bei denen der nagelförmige Bolzen in einer geradlinigen Setzbewegung nahezu drehungsfrei mit nur einem Schlag bei relativ hohen Fügegeschwindigkeiten von über 10 m/s oder 20 m/s gesetzt wird. Annähernd drehungsfreies Setzen des Bolzens bedeutet, dass ein Stempel über eine geradlinige Bewegung eine Setzkraft auf den Bolzen überträgt. Diese Setzkraft wird vorzugsweise nicht durch ein Drehmoment unterstützt, welches der Stempel auf den Bolzen überträgt. Ein Drehmoment wird bekanntermaßen gezielt beim Setzen einer Fließformschraube mit einer geradlinigen Bewegung des Stempels kombiniert und auf den entsprechenden Bolzen übertragen. Im vorliegenden Verfahren wird bevorzugt lediglich ein Bolzen mit einer bevorzugten äußeren Profilierung des Schafts, bspw. ein Außengewinde oder eine gewindeähnliche Formgebung, verwendet. Während einer nicht drehenden geradlinigen Setzbewegung des Stempels, welche den Bolzen in das mindestens eine Bauteil fügt, versetzt eine Wechselwirkung zwischen dem Bauteil und dem profilierten Schaft des Bolzens den Bolzen in Drehung.

Diese bekannte Technologie wird zugunsten einer reduzierten Lärmemission während des Setzverfahrens sowie einer bevorzugt reduzierten mechanischen Belastung eines das Setzgerät tragenden und führenden Roboters mit einer Fügegeschwindigkeit im einstelligen Bereich durchgeführt. Insbesondere wird die Fügegeschwindigkeit auf einen Wert ≤4 m/s begrenzt, wobei der mit diesem Verformungsschlag angetriebene Bolzen gerade nicht bis zur Kopfauflage in das nagelkopfzugewandte Bauteil eindringt. Vielmehr dient der als erste Stufe des Bolzensetzverfahrens durchgeführte Verformungsschlag dazu, die zur Verfügung stehende kinetische Energie, die ein Treiberkolben auf den einzutreibenden Bolzen übertragen hat, für die Verformung des mindestens einen Bauteils oder der zumindest zwei Bauteile beim Eindringen des Bolzenschafts in die Bauteile zu nutzen. Im Speziellen dringt der Bolzenschaft soweit in das mindestens eine Bauteil oder die zumindest zwei übereinander angeordneten Bauteile ein, dass ein Schaftbereich maximalen Durchmessers bezogen auf die Gesamtlänge des Schafts das mindestens eine Bauteil oder die übereinander angeordneten Bauteile vollständig durchdringt. Da der Schaft mit dem Abschnitt größten Durchmessers das Bauteil oder die Bauteile vollständig durchdringt, wird dadurch die in den Bauteilen erzeugte Durchdringungsöffnung des Schafts und der zu erzeugenden Verbindung bevorzugt annähernd maximal radial aufgeweitet. Damit verrichtet der Schaft beim Eindringen in das mindestens eine Bauteil während des Verformungsschlags vorzugsweise annähernd die gesamte Verformungsarbeit. Dadurch wird der nachfolgende Reibungsschlag oder allgemein das Fertigstellen der Verbindung vereinfacht und in seinem Energiebedarf im Vergleich zum Verformungsschlag deutlich reduziert.

Das erfindungsgemäße Verfahren ist angepasst, um eine Mehrzahl von übereinander angeordneten Bauteilen miteinander zu verbinden. In gleicher Weise ist es ebenfalls vorgesehen, um den nagelförmigen Bolzen in nur ein Bauteil zu setzen. Diese technische Lösung ist vorzugsweise interessant, wenn ein Bolzen als Schweißhilfsfügeteil in ein Bauteil aus nicht oder schlecht schweißbarem Material gesetzt wird. Dies eröffnet die Möglichkeit, das Bauteil mit dem gesetzten Bolzen über das Schweißhilfsfügeteil mit einem weiteren Bauteil aus schweißbarem Material zu verschweißen.

Des Weiteren ist es bevorzugt, den nagelförmigen Bolzen in Form eines Funktionsbolzens in nur ein Bauteil zu setzen. In einem derartigen Funktionsbolzen umfasst der Kopf vorzugsweise einen Gewindeabschnitt, einen Kugelkopf, eine andere Verbindungs- oder Kupplungsstruktur oder einen anderweitig geeigneten Funktionsabschnitt auf.

Unabhängig davon, ob in der folgenden Beschreibung, den Zeichnungen und den Patentansprüchen das Setzen des Fügeelements in nur ein Bauteil oder in einem Stapel aus mindestens zwei übereinander angeordneten Bauteilen beschrieben wird, gelten diese Beschreibungen gleichermaßen für das Setzen in nur ein Bauteil und für das Setzen in den Stapel aus mindestens zwei Bauteilen. Zudem ist auch das unten beschriebene Setzgerät mit Steuereinheit dafür vorgesehen, das Fügeelement in nur ein Bauteil oder in einen Stapel aus mindestens zwei Bauteilen zu setzen.

Sich an den Verformungsschlag anschließend wird der Reibungsschlag ausgeführt, der den Bolzen bis zur Kopfauflage auf dem nagelkopfzugewandten Bauteil in die übereinander angeordneten Bauteile oder das eine Bauteil eintreibt oder bevorzugt eindrückt oder einschlägt. Mithilfe dieser Verfahrensführung wird eine zumindest zwei Schritte umfassende Strategie realisiert. Im ersten Schritt erfolgt der im Vergleich zum zweiten Schritt größere Energieeintrag über den einzutreibenden Bolzen in das/die Bauteile. Denn dieser erste Energieeintrag wird dazu verwendet, dass der Bolzenschaft mit seinem Bereich mit dem größten Schaftdurchmesser die übereinander angeordneten Bauteile oder das eine Bauteil durchdringt, ohne dass der Kopf zur Auflage auf dem kopfzugewandten Bauteil kommt. Dazu wird gezielt der durch den Treiberkolben auf den einzutreibenden Bolzen übertragene Energieeintrag derart eingestellt, dass der Bolzen durch den Verformungsschlag zwar das/die Bauteile für das Durchdringen des Bolzenschafts optimal aufweitet, jedoch durch die Reibung zwischen dem Bauteil oder den Bauteilen und dem Bolzenschaft ohne Kopfauflage auf dem nagelkopfzugewandten Bauteil in dem bzw. den Bauteilen abgebremst wird und dort steckenbleibt. Dieses Vorgehen verhindert einerseits den durch das Aufschlagen des Bolzenkopfes auf dem ihm zugewandten Bauteil erzeugten Lärm. Zudem wird durch den Verformungsschlag das weitere Fügen und somit das finale Herstellen der Fügeverbindung zwischen Bolzen und Bauteil oder Bauteilen dahingehend vorbereitet, dass für ein weiteres Eintreiben des Bolzens in die übereinander angeordneten Bauteile oder das Bauteil lediglich der Reibschluss zwischen Bolzenschaft und Bauteil/Bauteilen überwunden werden muss.

Da der Reibschluss zwischen den miteinander zu verbindenden Bauteilen oder dem Bauteil und dem Bolzenschaft mit einem geringeren Energiebedarf im Vergleich zum Verformungsschlag überwindbar ist, erfolgt innerhalb des Reibungsschlags ein geringerer Energieeintrag in Bolzen und Bauteile als im Verformungsschlag. Diesen Reibungsschlag kann man auch als Eindrücken oder Nachdrücken des nagelförmigen Bolzens in die miteinander zu verbindenden Bauteile oder das Bauteil bezeichnen. Dieses Eindrücken oder Nachdrücken erfolgt so weit, bis die Unterseite des Bolzenkopfes auf dem ihm zugewandten Bauteil aufliegt.

Mithilfe dieses erfindungsgemäßen Bolzensetzverfahrens wird somit ein singulärer Schlag des Treiberkolbens zum Setzen des Bolzens vermieden. Dies hat zur Folge, dass neben den hohen Kraftspitzen während des Fügevorgangs und den damit verbundenen Reaktionskräften beispielsweise auf einen das Setzgerät tragenden Roboter oder eine Zustellvorrichtung vermieden werden. Mithilfe der zumindest zwei Schläge umfassenden Strategie des erfindungsgemäßen Bolzensetzverfahrens lässt sich somit die über den Bolzen in die Fügestelle eingebrachte kinetische Energie an den Energiebedarf der Fügestelle genauer anpassen im Vergleich zu bekannten Bolzensetzverfahren, insbesondere Hochgeschwindigkeitsbolzensetzverfahren. Auf diese Weise wird ein geringerer Betrag an Überschussenergie der Fügestelle zugeführt, der beispielsweise in eine Lärmbelastung oder in eine mechanische Belastung der Fügestelle oder aber in ungünstige Reaktionskräfte auf einen mit dem Setzgerät verbundenen Roboter umgewandelt werden würden.

Erfindungsgemäß bevorzugt wird der Bolzen mit einem Treiberkolben mit einer Treiberkolbenmasse gefügt, die mit einer ersten Beschleunigung beschleunigt auf die erste Fügegeschwindigkeit eine kinetische Energie des Verformungsschlages festgelegt, so dass die Unterseite des Kopfes in einem Abstand zum benachbarten Bauteil allein aufgrund des Verformungsschlags angeordnet ist.

Erfindungsgemäß bevorzugt wird der das Bolzensetzverfahren startende Verformungsschlag in seiner kinetischen Energie derart eingestellt, dass der Bolzenschaft in den miteinander zu verbindenden Bauteilen oder dem Bauteil steckenbleibt, ohne dass eine Kopfauflage auf dem benachbarten Bauteil erzielt wird. Entsprechend ist es erforderlich, dass die kinetische Energie, die der beschleunigte Treiberkolben eines verwendeten Setzgeräts in Kombination mit einer Treiberkolbenmasse auf den Bolzen überträgt, quantitativ geringer gewählt ist, als sie zum Erreichen einer Bolzenkopfauflage erforderlich wäre.

Um vorzugsweise die Verdrängungsarbeit des Bolzenschafts zu ermitteln, der in übereinander angeordnete und miteinander zu verbindende Bauteile oder nur ein Bauteil eindringt, werden unterschiedliche Fügeversuche mit verschieden großen kinetischen Energieeinträgen des Bolzens gefahren. Werden beispielsweise mehrere gleichartige Bolzen in die miteinander zu verbindende Bauteile oder eine entsprechende Bauteilmaterial- und/oder Bauteilgeometriekombination mit unterschiedlich großen kinetischen Energieeinträgen gesetzt, ist anhand der Eindringtiefe des Bolzens und des damit verbundenen Kopfüberstands über das kopfzugewandte Bauteil zu erkennen, mit welchem kinetischen Energiebetrag der Verformungsschlag passend ausführbar ist. Die zum Setzen verwendeten Setzkräfte, das Bauteilmaterial, die Bauteilgeometrie, wie bspw. die Bauteildicke, die Bolzengeometrie, wie bspw. Schaftdurchmesser, Schaftlänge, Schaftprofiltiefe, Schaftprofilform, werden bevorzugt als fügeparameterspezifische Daten gesammelt. Diese bevorzugten Vorversuche dienen zum Erstellen eines bevorzugten Kennfelds, welches in einer Steuereinheit des Setzgeräts hinterlegt bzw. gespeichert wird. Dieses Kennfeld gibt vorzugsweise an, bei welcher Fügegeschwindigkeit des Treiberkolbens mit oder ohne Treiberkolbenmasse welcher Kopfüberstand des Bolzens erzielt wird. Analog dazu ist die Angabe der kinetischen Energie des Treiberkolbens mit oder ohne Treiberkolbenmasse bevorzugt, mit der ein bestimmter Kopfüberstand des Bolzens erzielt wird. Diese in der Kennwerttabelle oder Kennfeld gespeicherten Daten in ihrer Gesamtheit oder als Auswahl werden auch als fügeparameterspezifische Daten bezeichnet.

Aus diesem Kennfeld lässt sich ebenfalls bevorzugt ablesen, welcher Betrag an kinetischer Energie dem Bolzen noch über den Treiberkolben zugeführt werden muss, um den Bolzen bis zur Kopfauflage in die zu verbindenden Bauteile oder das eine Bauteil zu fügen. Es wird davon ausgegangen, dass die oben genannte und für den Fügevorgang erforderliche kinetische Energie durch eine am Treiberkolben einzustellende Fügegeschwindigkeit oder eine aufzubringende Setzkraft des Treiberkolbens darstellbar ist. Es versteht sich, dass in diesem Kennfeld ebenfalls hinterlegt sein muss, welche Bauteilmaterialien mit welcher Bauteildicke und mit welcher Bolzengeometrie gefügt werden (siehe oben), um die angegebenen Werte eindeutig zuordnen zu können. Zudem ist es bevorzugt, dass eine begrenzte Anzahl an Vorversuchen durchgeführt wird. Diese sich aus diesen Vorversuchen ergebenden fügeparameterspezifischen Daten werden bevorzugt interpoliert und/oder extrapoliert. Auf diese Weise erhält man eine Abschätzung von fügeparameterspezifischen Daten, die nicht explizit in den Vorversuchen getestet worden sind. Vorzugsweise sind dann aus dem Kennfeld auch fügeparameterspezifische Daten für bspw. nicht untersuchte Bauteildicken oder Schaftdurchmesser oder Bauteilzugfestigkeiten ableitbar.

Gemäß einer weiteren bevorzugten Ausgestaltung des Bolzensetzverfahrens ist der Treiberkolben dämpfend federvorgespannt gegen eine Roboterhand oder eine Zustelleinrichtung des Setzgeräts angeordnet und der Treiberkolben mit einem Linearantrieb in Form eines Servo-Linearmotors, eines Hydraulikzylinders, eines pneumatischen Zylinders oder eines Servomotors mit Getriebeglied angetrieben, wobei während der geradlinigen Setzbewegung des bevorzugt nicht drehenden Treiberkolbens zumindest eine der folgenden Größen bestimmt werden: ein Weg, eine Geschwindigkeit, eine Kraft des Treiberkolbens.

Während des Verformungsschlags wird der nagelförmige Bolzen auf eine höhere Fügegeschwindigkeit beschleunigt als im Reibungsschlag. Um den Treiberkolben mit seiner Treiberkolbenmasse auf die für den Verformungsschlag erforderliche Fügegeschwindigkeit zu bringen, muss der verwendete Linearantrieb in Abhängigkeit vom zur Verfügung stehenden Beschleunigungsweg für den Treiberkolben die passende Beschleunigung aufbringen. Die Höhe der Beschleunigung ist aber gleichzeitig für die Reaktionskraft entscheidend, die auf eine Zustellvorrichtung oder einen Roboter wirkt, der das Setzgerät zur Fügestelle bewegt. Um diese Reaktionskraft möglichst gering zu halten, was sich beispielsweise im Hinblick auf die zur Verfügung zu stellende Stabilität durch den das Setzgerät tragenden Roboter vorteilhaft auswirken würde, ist vorzugsweise der Beschleunigungsweg des Treiberkolbens in seiner Länge einstellbar und möglichst groß wählbar. Zudem ist der Treiberkolben und vorzugsweise der gesamte Linearantrieb gegen den bevorzugten Roboter oder eine Zustellvorrichtung federgedämpft angeordnet. Diese federgedämpfte Anordnung wandelt zumindest einen Teil der durch die Reaktionskraft auf einen Roboter oder die Zustellvorrichtung übertragenen Energie in Verformungsenergie oder Reibung der Dämpfungsvorrichtung um oder sie verzögert zeitlich die Wirkung der Reaktionskraft. Auf diese Weise werden mechanische Belastungen des Roboters oder der Zustellvorrichtung reduziert und/oder zumindest besser kontrolliert als ohne Dämpfungsvorrichtung.

Im Hinblick auf die Steuerung des erfindungsgemäß bevorzugten Bolzensetzverfahrens wird die geradlinige Setzbewegung des Treiberkolbens mithilfe einer passenden Sensorik überwacht. Dazu erfasst beispielsweise ein Wegsensor den zurückgelegten Weg des Treiberkolbens während der Setzbewegung. Zudem ist es bevorzugt, mithilfe eines Geschwindigkeitssensors die Geschwindigkeit des Treiberkolbens während der Setzbewegung zu erfassen oder die Geschwindigkeit aus dem erfassten Wegsignal in Abhängigkeit von der Zeit zu bestimmen. Gemäß einer weiteren bevorzugten Ausgestaltung wird die durch den Treiberkolben auf den Bolzen aufgebrachte Kraft mithilfe eines Kraftsensors erfasst und an eine elektronische Steuereinheit weitergeleitet. Es ist ebenfalls bevorzugt, die Steuer- und Betriebsdaten des Linearantriebs des Setzgeräts, welcher vorzugsweise als Servomotor realisiert ist, zu erfassen und auszuwerten, um daraus den zurückgelegten Weg des Treiberkolbens und/oder die durch den Treiberkolben aufgebrachte Kraft zu bestimmen. Mithilfe dieser elektronischen Steuereinheit ist es möglich, den ablaufenden Fügevorgang in Echtzeit, also in situ, zu überwachen und in das Setzverfahren in Abhängigkeit von den ermittelten Daten einzugreifen.

Gemäß einer weiteren bevorzugten Ausführungsform des Bolzensetzverfahrens wird der Treiberkolben angetrieben durch den Linearantrieb auf die erste Fügegeschwindigkeit beschleunigt, ein Auftreffen des Treiberkolbens auf den Bolzen erfasst, insbesondere durch Auswerten eines Wegsignals des Treiberkolbens in Abhängigkeit von der Zeit, und danach das Antreiben des Treiberkolbens abgeschaltet.

Gemäß der oben beschriebenen bevorzugten Sensorik zur Überwachung und Steuerung des Bolzensetzverfahrens und/oder gemäß der oben beschriebenen Auswertung der Betriebsdaten des Linearantriebs wird/werden der durch den Treiberkolben während des Verformungsschlags zurückgelegte Weg erfasst. Anhand des vom Treiberkolben zurückgelegten Wegs in Abhängigkeit von der Zeit ist erkennbar, wann der Treiberkolben auf den Bolzen auftrifft, um die kinetische Energie des Treiberkolbens auf den Bolzen zu übertragen.

Während der Treiberkolben bis zum Auftreffen auf den Bolzen durch den Linearantrieb angetrieben worden ist, wird vorzugsweise im Moment des Auftreffens des Treiberkolbens auf den Bolzen ein weiteres Antreiben des Bolzens durch den Linearantrieb beendet. Denn die durch den Treiberkolben auf den Bolzen übertragene kinetische Energie ist vorzugsweise derart abgestimmt, dass sie für die erforderliche Verformungsarbeit des Bolzenschafts in den miteinander zu verbindenden Bauteilen oder einem Bauteil ausreichend ist. Dies wird bevorzugt durch die in Abhängigkeit von Treiberkolben und Treiberkolbenmasse eingestellte Fügegeschwindigkeit festgelegt. Entsprechend dringt der Schaftbereich mit dem größten Durchmesser bezogen auf die Schaftlänge durch die miteinander zu verbindenden Bauteile oder das Bauteil vollständig hindurch und zudem bleibt der Bolzen mit einem Kopfüberstand in den miteinander zu verbindenden Bauteilen oder dem Bauteil stecken.

Die Trägheit der Treiberkolbenmasse und die auf den Treiberkolben übertragene kinetische Energie sorgen somit dafür, dass der Verformungsschlag durchgeführt wird. Sollte aber das erfindungsgemäß bevorzugte Bolzensetzverfahren mit einem Setzgerät im Überkopfbetrieb durchgeführt werden, könnte sich die Schwerkraft verzögern auf den Treiberkolben mit seiner Treiberkolbenmasse auswirken. In diesem Fall wird vorzugsweise der Treiberkolben soweit beschleunigt, dass die abbremsende Schwerkraft ausgeglichen wird. Dieses bevorzugte Vorgehen stellt sicher, dass der über die gewählte Fügegeschwindigkeit in den Verformungsschlag eingebrachte kinetische Energiebetrag nicht durch eine ungünstige Positionierung eines ausführenden Setzgeräts im Raum, also durch eine Arbeits- oder Betriebsposition des Setzgeräts im Raum, beeinflusst wird.

Gemäß einer weiteren bevorzugten Ausführungsform des Bolzensetzverfahrens wird während des Verformungsschlags der Bolzen durch Verformungsarbeit des Bolzens während eines Eindringens des Schafts in das mindestens eine Bauteil auf eine Durchtreibgeschwindigkeit des Schafts durch das Bauteil oder die Bauteile abgebremst, die ≤ 85 % der ersten Fügegeschwindigkeit des Verformungsschlags ist, und es findet ein erneutes Antreiben des Treiberkolbens mit dem Linearantrieb mit der zweiten Fügegeschwindigkeit im Reibungsschlag statt, die kleiner oder gleich der Durchtreibgeschwindigkeit ist.

Gemäß einer weiteren bevorzugten Ausgestaltung des erfindungsgemäßen Bolzensetzverfahrens wird der Verformungsschlag gerade nicht so durchgeführt, bis der Bolzen zur Ruhe kommt und in den miteinander zu verbindenden Bauteilen oder dem Bauteil stecken bleibt. Stattdessen ist es bevorzugt, dass die zunächst verwendete Fügegeschwindigkeit des Bolzens im Verformungsschlag auf die Durchtreibgeschwindigkeit des Bolzens durch das/die Bauteile abgebremst wird. Diese Durchtreibgeschwindigkeit bringt zum Ausdruck, wie schnell der Bolzen nach erfolgter Verformungsarbeit in den miteinander zu verbindenden Bauteilen oder dem Bauteil bis zur Kopfauflage weiter in das/die Bauteile eingedrückt werden kann. Somit unterstreicht die Durchtreibgeschwindigkeit, mit welcher Geschwindigkeit der Reibungsschlag durchführbar ist, um eine vollständige Fügeverbindung mit dem Bolzensetzverfahren herstellen zu können.

In diesem Zusammenhang ist es aber nicht zwingend erforderlich, dass die zweite Fügegeschwindigkeit des Reibungsschlages der Durchtreibgeschwindigkeit in ihrer Höhe entspricht. Vielmehr bringt der bevorzugte Verfahrensablauf zum Ausdruck, dass der Verformungsschlag und der Reibungsschlag ineinander übergehen können, wobei die aus dem Verformungsschlag vorhandene Gleitreibung zwischen Bolzenschaft und Bauteilen vorteilhaft im Reibungsschlag nutzbar ist. Dieser bevorzugt fließende Übergang zwischen Verformungsschlag und Reibungsschlag unterstützt bevorzugte kurze Taktzeiten zum Herstellen der Verbindung.

Eine weitere ebenfalls bevorzugte Strategie besteht darin, zunächst den Stillstand des Bolzens nach dem Verformungsschlag abzuwarten, um dann mit dem darauffolgenden Reibungsschlag die Haftreibung zwischen Bauteil und Bolzen zu überwinden und die Verbindung vollständig herzustellen.

Gemäß einer weiteren bevorzugten Ausgestaltung des erfindungsgemäßen Bolzensetzverfahrens umfasst dieses den weiteren Schritt des Erfassens der Kopfauflage des Bolzens während des Reibungsschlags durch Auswerten des Wegs und/oder der Geschwindigkeit des Treiberkolbens und das Beenden des Antreibens des Treiberkolbens im Reibungsschlag.

Den Abschluss des bevorzugten Bolzensetzverfahrens erkennt man mithilfe der Auswertung des Wegsignals und/oder des Geschwindigkeitssignals des Treiberkolbens. Denn sobald der Bolzen vollständig in das Bauteil oder die miteinander zu verbindenden Bauteile gesetzt worden ist, bewegt sich der Treiberkolben im Rahmen der Messtoleranzen nicht mehr in Fügerichtung weiter. Zudem fällt auch die Geschwindigkeit des Treiberkolbens deutlich ab, was das Ende des Setzvorgangs signalisiert. Aufbauend auf dieser Auswertung des Wegsignals und/oder des Geschwindigkeitssignals des Treiberkolbens wird das Antreiben des Treiberkolbens beendet. Zudem ist es bevorzugt, nach Abschluss des Reibungsschlages den Treiberkolben in seine Ausgangsposition zurück zu bewegen.

Gemäß einer weiteren alternativen Ausgestaltung des erfindungsgemäß bevorzugten Bolzensetzverfahrens wird zunächst der Bolzen während des Verformungsschlags durch Verformungsarbeit in dem Bauteil oder den Bauteilen vollständig abgebremst, danach erfolgt das Entfernen des Treiberkolbens vom Bolzen in eine Rückzugsposition und das Beschleunigen des Treiberkolbens aus der Rückzugsposition auf eine dritte Fügegeschwindigkeit, mit der der Treiberkolben im Reibungsschlag den Bolzen zum Erreichen der Kopfauflage antreibt und die ≤ 85 % der ersten Fügegeschwindigkeit ist, und das Abschalten des Antreibens des Treiberkolbens nach erfasstem Auftreffen des Treiberkolbens auf dem Bolzen.

Gemäß der oben genannten bevorzugten Ausgestaltung wird zunächst abgewartet, bis der Verformungsschlag abgeschlossen ist und sich der Bolzen nicht mehr in Fügerichtung bewegt. Vorzugsweise wird entsprechend zu der zu diesem Zeitpunkt erreichten Eindringtiefe des Bolzens, welche vorzugsweise anhand des Kopfüberstands des Bolzens zum kopfzugewandten Bauteil bestimmt wird, der nötige Energiebedarf bestimmt, um die Fügeverbindung vollständig herstellen zu können. Der Kopfüberstand bezeichnet den Abstand zwischen der Kopfunterseite des Bolzens und der kopfzugewandten Bauteiloberfläche.

Um den abschließenden Reibungsschlag durchführen zu können, wird der Treiberkolben aus einer bevorzugten Rückzugsposition auf die erforderliche dritte Fügegeschwindigkeit und die damit verbundene kinetische Energie des Treiberkolbens beschleunigt. Diese kinetische Energie wird beim Auftreffen des Treiberkolbens auf den Bolzen auf diesen übertragen, sodass dieser den Reibschluss zwischen Schaft und Bauteil/Bauteilen überwindet. Zudem dient die auf den Bolzen übertragene Energie dazu, den Bolzen bis zur Kopfauflage in die miteinander zu verbindenden Bauteile oder das Bauteil zu setzen. Nachdem anhand des Wegsignals des Treiberkolbens und/oder des Geschwindigkeitssignals des Treiberkolbens erkennbar ist, dass der Fügevorgang abgeschlossen ist, wird ein weiteres Antreiben des Treiberkolbens beendet.

Wie es oben bereits erwähnt worden ist, wird gemäß einer weiteren bevorzugten Ausgestaltung des erfindungsgemäßen Bolzensetzverfahrens als weiterer Schritt durchgeführt: Ermitteln eines Kopfüberstands des Bolzens nach Abschluss des Verformungsschlags und Bestimmen der dritten Fügegeschwindigkeit des Treiberkolbens anhand des Kopfüberstands, insbesondere auf Grundlage einer fügeparameterspezifischen Kennwerttabelle für Fügegeschwindigkeiten in Abhängigkeit vom Kopfüberstand.

Eine nicht erfindungsgemäße Ausführungsform umfasst zudem ein weiteres Bolzensetzverfahren eines nagelförmigen Bolzens mit einem Kopf und einem sich davon erstreckenden verjüngend auslaufenden Schaft in mindestens ein Bauteil, vorzugsweise in einen Stapel aus mindestens zwei übereinander angeordneten Bauteilen, aus Metall und/oder Kunststoff, bei dem der Bolzen annähernd drehungsfrei mit einer geradlinigen Setzbewegung in die Bauteile gesetzt wird. Das Bolzensetzverfahren weist die folgenden Schritte auf: Fügen des Bolzens in das mindestens eine Bauteil mit einem Verformungsschlag, bei dem der Bolzen eine erste Fügegeschwindigkeit von ≤4 m/s erreicht und der Schaft mit einem Bereich maximalen Durchmessers bezogen auf eine Schaftlänge die Bauteile vollständig durchdringt, und Abbremsen des Bolzens durch Verformungsarbeit des Bolzens während eines Eindringens des Schafts in das mindestens eine Bauteil, bis eine Unterseite des Kopfes auf einem kopfzugewandten Bauteil aufliegt.

Im Rahmen dieser Alternative des Bolzensetzverfahrens wird der Verformungsschlag in Bezug auf seinen Energieeintrag in den bzw. auf den zu setzenden Bolzen derart abgestimmt, dass allein mit dem Verformungsschlag der Bolzen bis zur Kopfauflage in die miteinander zu verbindenden Bauteile oder das Bauteil gefügt wird. In diesem Zusammenhang ist es von Bedeutung, dass die Fügegeschwindigkeit des Verformungsschlags derart niedrig eingestellt wird, dass die Lärmbelästigung von nur mit einem Schlag eingefügten Bolzen vermieden wird. Denn gerade die gezielte Wahl der Fügegeschwindigkeit und damit des Energiebetrags an kinetischer Energie, der durch den Treiberkolben in den Bolzen eingeprägt wird, soll derart gering gewählt sein, dass vorzugsweise keine Überschussenergie des Bolzens in eine unnötige Lärmbelastung der Umgebung umgewandelt wird. Daher ist die während des Verformungsschlags verwendete kinetische Energie gerade ausreichend, um die nötige Verformungsarbeit des Bolzenschafts zu leisten und gleichzeitig noch das Eindringen des Bolzens bis zur Kopfauflage zu gewährleisten.

Vorliegende Erfindung offenbart zudem ein Setzgerät zur Realisierung des oben beschriebenen Bolzensetzverfahrens gemäß seiner unterschiedlichen bevorzugten Ausführungsformen. Das Setzgerät, mit dem annähernd drehungsfrei der nagelförmige Bolzen in einer geradlinigen Setzbewegung in einen Stapel aus mindestens zwei übereinander angeordneten Bauteilen oder in nur ein Bauteil zumindest zweistufig setzbar ist, weist die folgenden Merkmale auf: einen durch einen Linearantrieb angetriebenen und geradlinig drehungsfrei bewegten Treiberkolben mit einer Treibermasse, wobei mit dem Treiberkolben der Bolzen gesetzt wird, ein Schlitten, auf dem der Linearantrieb mit dem Treiberkolben angeordnet ist, wobei der Schlitten gegen eine Dämpfungseinrichtung bewegbar ist, insbesondere in einer Befestigung an einer Roboterhand eines Industrieroboters oder einer Zustelleinrichtung, und eine elektronische Steuereinheit, die angepasst ist, um das Setzgerät gemäß dem Bolzensetzverfahren nach einem der vorhergehenden Patentansprüche anzusteuern.

Das erfindungsgemäße Setzgerät zeichnet sich dadurch aus, dass der verwendete Linearantrieb den nagelförmigen Bolzen geradlinig und annähernd drehungsfrei mithilfe des Treiberkolbens in die miteinander zu verbindenden Bauteile eintreibt. Um eine mögliche Reaktionskraft des Setzgeräts auf einen verbundenen Roboter oder eine Zustellvorrichtung möglichst gering zu halten, ist der Linearantrieb auf einem Schlitten angeordnet. Dieser Schlitten gewährleistet eine Ausgleichsbewegung entgegen der Fügebewegung des Linearantriebs. Zudem ist vorzugsweise der Schlitten federvorgespannt gegen die Befestigung an einer Roboterhand eines Industrieroboters oder gegen eine bevorzugt eingesetzte Zustellvorrichtung für das Setzgerät.

Zudem ist es bevorzugt, dass man mithilfe der elektronischen Steuereinheit des Setzgeräts nicht nur unterschiedliche Fügegeschwindigkeiten des Treiberkolbens einstellen kann. Vielmehr ist es ebenfalls erfindungsgemäß bevorzugt, dass der Linearantrieb eine bestimmte Wegstrecke, den sogenannten Beschleunigungsbeweg des Treiberkolbens, zur Verfügung hat, um den Treiberkolben mit seiner Treiberkolbenmasse auf die erforderliche Fügegeschwindigkeit zu beschleunigen. Je kürzer der Beschleunigungsweg des Linearantriebs für den Treiberkolben bei gleicher einzustellenden Fügegeschwindigkeit ausfällt, umso höher muss die Treiberbeschleunigung sein, um die gewünschte Fügegeschwindigkeit zu erzielen. Mit zunehmender Treiberbeschleunigung steigt aber ebenfalls die Reaktionskraft auf die mit dem Setzgerät verbundene Zustellvorrichtung oder den verbundenen Roboter. Da diese Reaktionskraft möglichst gering gehalten werden soll, ist es erfindungsgemäß bevorzugt, mithilfe einer gezielten Wahl der Länge des Beschleunigungswegs die damit verbundenen Reaktionskräfte gering zu halten oder zu reduzieren. Somit lassen sich die bevorzugten niedrigen Fügegeschwindigkeiten von ≤ 4 m/s im Verformungsschlag sowie eine bevorzugt gezielte Wahl eines möglichst langen Beschleunigungswegs ausnutzen, um die Belastung einer verbundenen Zustelleinrichtung oder eines Roboters zu vermindern.

Weiterhin bevorzugt weist das erfindungsgemäße Setzgerät unterschiedliche konstruktive Ausgestaltungsalternativen auf. Gemäß einer ersten bevorzugten Ausführungsform ist der Treiberkolben mit einer ersten Fügegeschwindigkeit von ≤4 m/s bewegbar und damit ein Bolzen setzbar.

Gemäß einer weiteren bevorzugten Ausführungsform des Setzgeräts ist der Treiberkolben auf eine vorbestimmte Fügegeschwindigkeit über eine Länge eines vorbestimmten Beschleunigungswegs beschleunigbar, wobei eine Reaktionskraft auf eine das Setzgerät tragende Zustellvorrichtung oder einen Roboter durch eine Größe der Fügegeschwindigkeit und/oder die Länge des Beschleunigungswegs des Treiberkolbens einstellbar ist.

Gemäß einer anderen bevorzugten Ausführungsform des Setzgeräts ist der Linearantrieb ein Servo-Linearmotor, ein Hydraulikzylinder, ein pneumatischer Zylinder oder ein Servomotor mit Getriebeglied. Diese unterschiedlichen konstruktiven Alternativen des Servo-Linearantriebs haben den Vorteil, dass aus den erfassten Betriebsdaten des Servo-Linearantriebs Daten, wie Treiberweg und aufgebrachte Treiberkraft oder Fügekraft, bestimmbar sind. Im Hinblick auf einen Pneumatikzylinder oder einen Hydraulikzylinder werden Sensoren zur Ermittlung dieser Daten eingesetzt.

Vorzugsweise umfasst das Setzgerät mindestens einen Sensor am Treiberkolben, um einen Weg, eine Geschwindigkeit und/oder eine Kraft des Treiberkolbens zu ermitteln. In diesem Zusammenhang muss der Sensor nicht unmittelbar am oder auf dem Treiberkolben angeordnet sein. Denn die zu erfassenden Daten, wie Weg, Geschwindigkeit und/oder Kraft, lassen sich auch aus den Antriebsdaten des Linearantriebs ableiten. Entsprechend ist das gegenständliche Vorhandensein des Sensors nicht entscheidend sondern vielmehr die bevorzugte funktionelle Ausgestaltung des Setzgeräts, derartige Daten gezielt zu ermitteln oder zu erfassen und an die Steuereinheit weiterzuleiten. Zudem ist es bevorzugt, dass die elektronische Steuereinheit in situ den Fügevorgang erfasst und aufgrund der erfassten Daten den Fügevorgang steuert.

## 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:

Figur 1    eine schematische Darstellung bevorzugter Komponenten einer Roboterzelle umfassend einen Industrieroboter mit einem bevorzugten Setzgerät mit Linearantrieb des Stempels und einer elektronischen Steuereinheit,

Figur 2    eine schematische Darstellung des Industrieroboters mit einer bevorzugten Ausführungsform des Setzgeräts mit einem bevorzugten pneumatischen Linearantrieb des Stempels und der elektronischen Steuereinheit,

Figur 3    eine schematische Darstellung des Industrieroboters mit einer weiteren bevorzugten Ausführungsform des Setzgeräts einem ebenfalls bevorzugten pneumatischen Linearantrieb des Stempels und der elektronischen Steuereinheit,

Figur 4    eine schematische Darstellung des Industrieroboters mit einer weiteren bevorzugten Ausführungsform des Setzgeräts mit einem Spindeltrieb als Linearantrieb des Stempels und der elektronischen Steuereinheit,

Figur 5    eine schematische Darstellung des Industrieroboters mit einer weiteren bevorzugten Ausführungsform des Setzgeräts mit einem Linearmotor als Linearantrieb des Stempels und der elektronischen Steuereinheit,

Figur 6    eine schematische Darstellung des bevorzugten Linearmotors mit Treibermasse und Setzkopf in zwei Ansichten,

Figur 7a    eine schematische Darstellung der zwei bevorzugten Phasen des Fügevorgangs beim Setzen eines nagelförmigen Fügeelements in nur ein Bauteil,

Figur 7b    eine schematische Darstellung der zwei bevorzugten Phasen des Fügevorgangs beim Setzen eines nagelförmigen Fügeelements in mindestens zwei übereinander angeordneten Bauteilen,

Figur 8      ein schematisches Fügediagramm zur Veranschaulichung der Betriebsphasen einer Ausführungsform des erfindungsgemäßen Fügeverfahrens, in dem die bevorzugte Änderung der Fügekraft des Stempels, des Wegs des Stempels und der Geschwindigkeit des Stempels in Abhängigkeit von der Zeit dargestellt sind,

Figur 9      ein Flussdiagramm einer bevorzugten Ausführungsform des Bolzensetzverfahrens gemäß Figur 8,

Figur 10      ein schematisches Fügediagramm zur Veranschaulichung der Betriebsphasen einer weiteren Ausführungsform des erfindungsgemäßen Fügeverfahrens, in dem die bevorzugte Änderung der Fügekraft des Stempels, des Wegs des Stempels und der Geschwindigkeit des Stempels in Abhängigkeit von der Zeit dargestellt sind,

Figur 11      ein Flussdiagramm einer weiteren bevorzugten Ausführungsform des Bolzensetzverfahrens gemäß Figur 10.

## 5. Detaillierte Beschreibung der bevorzugten Ausführungsformen

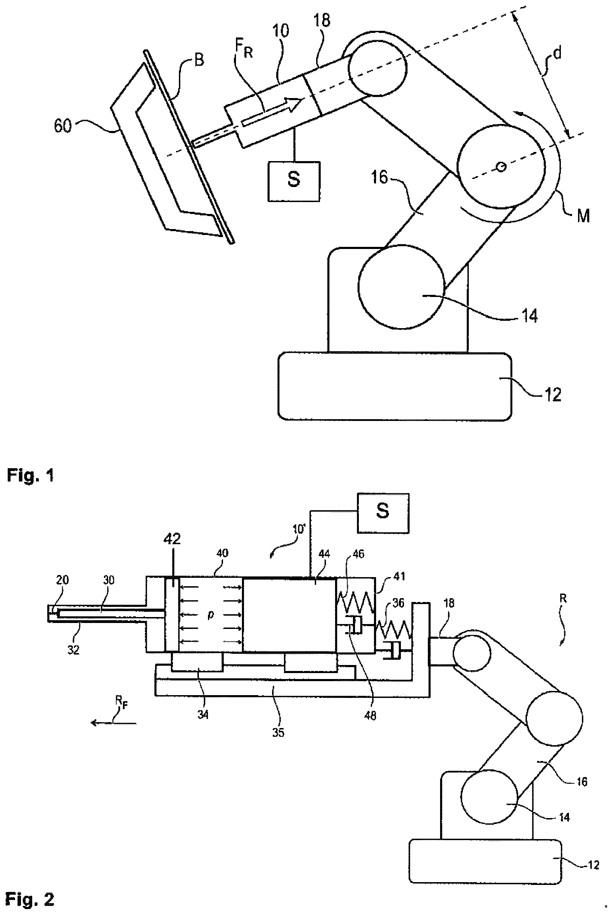

Die Figuren 1-5 zeigen verschiedene schematische Darstellungen von Roboterzellen, also einem Arbeitsbereich eines Industrieroboters R in Kombination mit einem Setzgerät 10, welches oder welche durch eine elektronische Steuereinheit S überwacht und/oder angesteuert werden. Ein Industrieroboter R ist ein universell einsetzbarer Bewegungsautomat mit mehreren Achsen, dessen Bewegungen hinsichtlich Bewegungsfolge und Wegen bzw. Winkeln frei programmierbar und gegebenenfalls sensorgeführt sind. Erfindungsgemäß bevorzugt ist der Industrieroboter R mit dem Setzgerät 10 mit Steuereinheit S ausgestattet.

Je nach Bearbeitungsaufgabe ist der Industrieroboter R unterschiedlich aufgebaut und konfiguriert. Derartige Industrieroboter R sind allgemein bekannt und werden in den unterschiedlichsten Anwendungsgebieten eingesetzt. In Abhängigkeit von der Kinematik des Industrieroboters werden die Industrieroboter R in unterschiedliche Gruppen eingeteilt. Die Industrieroboter der Gruppe mit paralleler Kinematik umfassen Delta-Roboter mit drei gestellfest montierten Rotationsachsen sowie Hexapod-Roboter mit sechs Linearachsen. Des Weiteren gibt es die Industrieroboter R mit serieller Kinematik. Zu dieser Gruppe zählen Gelenkarmroboter mit 5- und 6-Achs-Robotern mit fünf bzw. sechs Rotationsachsen, 7-Achs-Roboter mit sieben Achsen, Dualarm-Roboter mit 15 Achsen sowie Scara-Roboter mit drei parallelen Rotationsachsen und einer Linearachse. Die obigen Beispiele dienen der Illustration zur Gruppe der bekannten Industrieroboter R, die in Kombination mit dem Setzgerät 10 mit Steuereinheit S variabel einsetzbar sind.

Unabhängig von der am Industrieroboter R befestigten Bearbeitungsvorrichtung, hier das bevorzugte Setzgerät 10, werden die Industrieroboter R über die Kenngröße Traglast charakterisiert. Die Traglast beschreibt die Masse, die am Ende des Manipulators, also am Funktionsende des Industrieroboters, maximal befestigt werden kann. Bekannte Industrieroboter R, wie beispielsweise Gelenkarmroboter, zeichnen sich derzeit durch eine Traglast im Bereich von 2,5-1300 kg aus.

In den Figuren 1-5 umfasst der Industrieroboter R neben einem Befestigungsfuß 12 zwei über Drehachsen 14 miteinander verbundene beispielgebende Roboterarme 16. Zudem ist ein Funktionsende 18 vorgesehen, an dem das Setzgerät 10 angeordnet ist. Das Setzgerät 10 ist mit der elektronischen Steuereinheit S verbunden.

Die elektronische Steuereinheit S ist drahtlos oder physikalisch an das Setzgerät 10 angeschlossen. In der Steuereinheit S ist das unten näher erläuterte Bolzensetzverfahren als ein ausführbares Softwareprogramm hinterlegt. Somit sind die verschiedenen bevorzugten konstruktiven Ausführungsformen des Setzgeräts 10 mit Hilfe der Steuereinheit S gezielt ansteuerbar und überwachbar. Die Steuereinheit S besteht bevorzugt aus einem Industriecomputer mit mindestens einem Prozessor und einem Speicher. Vorzugsweise ist in dem Speicher das Bolzensetzverfahren als ausführbares Softwareprogramm hinterlegt und mit Hilfe des Prozessors ausführbar.

Es ist ebenfalls bevorzugt, dass die Steuereinheit S die Bewegung des Roboters R oder einer alternativ zum Roboter R einsetzbaren Zustelleinheit (nicht gezeigt) steuert und/oder überwacht. Auf diese Weise werden das Setzgerät 10 und der Roboter R oder die Zustelleinheit abgestimmt aufeinander bewegt.

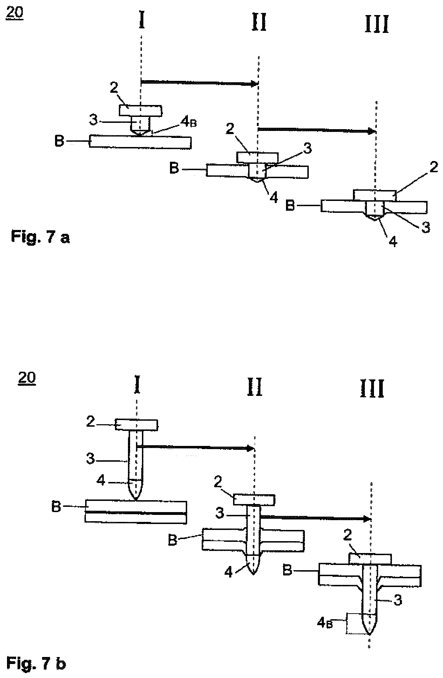

Mit dem bevorzugten Setzgerät 10 wird über einen Treiberkolben 30 ein nagelförmiger Bolzen 20 in mindestens ein Bauteil B (siehe Figur 1) gesetzt. Der Bolzen 20 ist vorzugsweise ein Fügeelement zum Verbinden von mindestens zwei stapelförmig übereinander angeordneten Bauteilen. Dies ist schematisch in Fig. 7b dargestellt. Gemäß einer weiteren bevorzugten Ausführungsform vorliegender Erfindung ist der Bolzen 20 ein Schweißhilfsfügeteil (siehe oben), der in mindestens ein Bauteil gemäß Fig. 7a eingebracht wird. Zudem bevorzugt ist er Bolzen 20 ein Funktionsbolzen, wie er oben beschrieben worden ist. Zum Setzen des nagelförmigen Bolzens 20 bringt der Treiberkolben 30 eine linear wirkende Fügekraft auf, die den Bolzen 20 in das mindestens eine Bauteil B eindrückt oder einschießt. Entsprechend der Fügekraft erzeugt das Setzgerät 10 einen Bearbeitungsimpuls auf den Bolzen 20. Da der Bolzen 20 annähernd drehungsfrei, d.h. ohne eine gezielte Übertragung eines Drehmoments auf den Bolzen 20, gesetzt wird, erzeugt das Setzgerät 10 keinen Drehimpuls im Bolzen 20, die das Entstehen einer Verbindung beeinflussen kann.

Der Bearbeitungsimpuls, der durch das Setzgerät 10 mit oder ohne Grunddämpfungsmodul erzeugt wird, löst entsprechend eine auf den Industrieroboter R rückkoppelnde Reaktionskraft aus.

Mithilfe des bevorzugten Setzgeräts 10 gemäß Figur 2 wird der Bolzen 20 durch eine Bewegung des Industrieroboters R an eine definierte Fügestelle bewegt und dort gesetzt. Das an einem Funktionsende 18 befestigte Setzgerät 10 umfasst dazu den Treiberkolben 30, der sich über einen Linearantrieb 40 am Funktionsende 18 abstützt. Ein bevorzugter Niederhalter 32 umgibt linear verschiebbar den Treiberkolben 30. Der Niederhalter 32 ist gleitend auf einer Führung 34 gelagert. Eine Niederhalterfeder 36 erzeugt eine Federvorspannung in Fügerichtung $R_F$.

Figur 2 zeigt eine bevorzugte Ausführungsform des Setzgeräts 10 mit einem Pneumatikzylinder 40. Eine Stempelkraft des Treiberkolbens 30 wird über einen pneumatischen Kolben 42 erzeugt. Im Pneumatikzylinder 40 ist zudem bevorzugt eine bewegliche Masse 44 angeordnet. Die Masse 44 stützt sich federnd über eine Feder 46 an einer Rückwand 41 des Pneumatikzylinders 40 ab. Zudem ist die Masse 44 bevorzugt über einen Dämpfer 48 gegen die Rückwand 41 gedämpft angeordnet. Der Kolben 42 wird durch Druckbeaufschlagung P in Fügerichtung $R_F$ gegen den Treiberkolben 30 und damit den nagelförmigen Bolzen 20 gepresst und der Treiberkolben 30 setzt den Bolzen 20 in das mindestens eine Bauteil (nicht gezeigt). Dazu befindet sich eine pneumatische Druckkammer des Linearantriebs 40 zwischen dem Kolben 42 und der Masse 44.

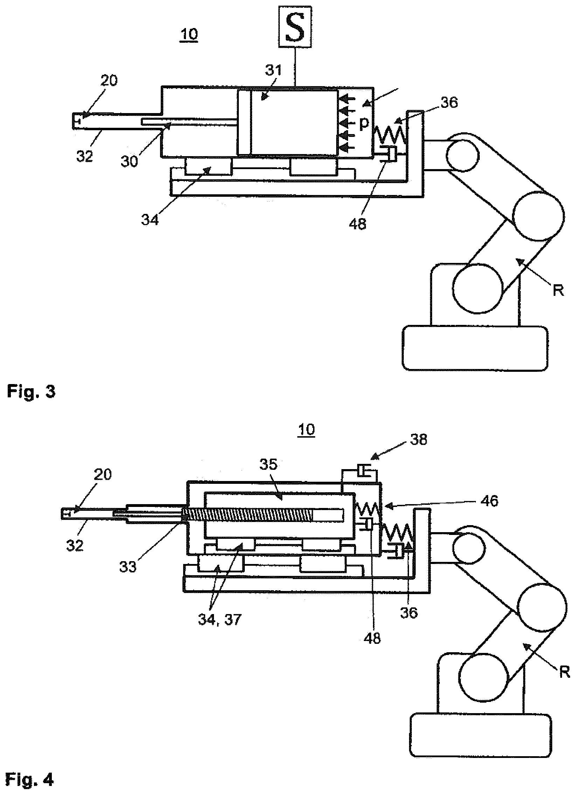

Eine weitere bevorzugte Ausführungsform des Setzgeräts 10 zeigt Figur 3. In dieser Ausführungsform wird ebenfalls der Bolzen 20 über den Treiberkolben 30 auf eine Fügegeschwindigkeit beschleunigt und damit in das mindestens eine Bauteil gesetzt. Der Linearantrieb des Setzgeräts 10 ist ein Pneumatikzylinder, in welchem der Treiberkolben 30 mit einer Treibermasse 31 verbunden ist. Die Druckkammer zum Bewegen des Treiberkolbens 30 ist in Fügerichtung $R_F$ vor der Treibermasse 31 angeordnet. Der Linearantrieb 40, d. h. der Pneumatikzylinder, ist für eine lineare Ausgleichsbewegung als Schlitten auf der Führung 34 angeordnet. Zudem ist der Linearantrieb 40 in gleicher Weise wie in Figur 2 über eine Feder 36 gegen den Roboter R dämpfend abgestützt.

Eine weitere bevorzugte Ausgestaltung des Setzgeräts 10 zeigt schematisch Figur 4. Der Treiberkolben 30, der den Bolzen 20 mit einer definierten Fügegeschwindigkeit setzt, wird durch eine Spindel 33 mit einem Spindeltrieb 35 bewegt. Der Spindeltrieb 35 und die Spindel 33 bilden den Linearantrieb 40 des Setzgeräts 10, um den Bolzen 20 drehungsfrei zu setzen.

Vorzugsweise ist der Spindeltrieb 35 mit einer Rückhubdämpfungsmasse verbunden. Diese hat vorzugsweise die gleiche Funktion wie die Treibermasse 31 des Setzgeräts 10 in Figur 2.

Der Linearantrieb 33, 35 ist als Schlitten auf einer Führung 37 angeordnet und gegen den Roboter R federvorgespannt. Ein bevorzugter Rückhubdämpfer 38 wirkt nur in Richtung der Reaktionskraft des Linearantriebs auf den Roboter R und dämpft bevorzugt diese Reaktionskraft oder verzögert sie zumindest.

Der Linearantrieb 33, 35 ist von einem Niederhalter umgeben. Dieser ist auf den Führungen 34 linear verschiebbar in oder entgegen der Fügerichtung $R_F$ angeordnet und über die Feder 36 dämpfend am Roboter R abgestützt (siehe Figur 2).

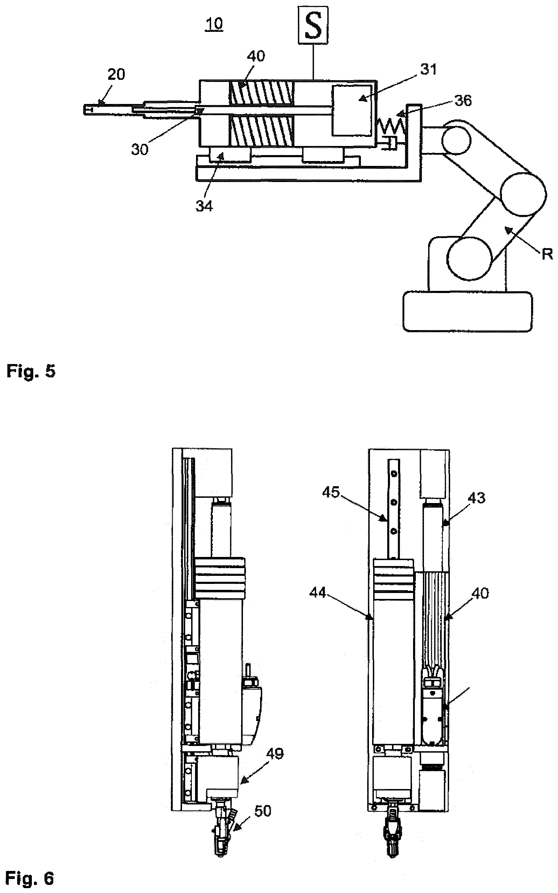

Die bevorzugte Ausgestaltung des Setzgeräts 10 gemäß Figur 5 bewegt den Treiberkolben 30 mit Treibermasse 31 mit einem Linearmotor 40 als Linearantrieb. Der Linearantrieb 40 ist in gleicher Weise wie der Spindeltrieb als Servomotor ausgeführt, so dass ein Motorstrom sowie eine lineare Bewegung des Spindeltriebs über die Drehzahl des Linearmotors und eine Gewindesteigung der Spindel über eine Motorsteuerung oder sensorisch erfassbar und in der Steuereinheit S verarbeitbar sind.

Der als Linearmotor ausgeführte Linearantrieb 40 ist ebenfalls als Schlitten auf den Führungen 34 bewegbar angeordnet und gegen den Roboter R federvorgespannt.

Figur 6 zeigt eine bevorzugte Ausführungsform des Linearmotors 40 des Setzgeräts 10 aus Figur 5. Der Linearmotor 40 bewegt linear einen Magnetstab 43. Der Magnetstab 43 ist mit einer Treibermasse 44 auf einer Führung 45 verbunden. Ein Umrichter 47 unterstützt die elektrische Ansteuerung und Versorgung des Linearmotors 40. Zur Erfassung des Wegs des Treiberkolbens 30 ist ein Wegsensor 49 vorgesehen. Dieser überträgt die erfassten Daten an die Steuereinheit S. Zudem umfasst der Linearantrieb 40 bevorzugt einen Setzkopf 50. Über den Setzkopf 50 wird ein zu setzender Bolzen 20 in Fügerichtung $R_F$ vor dem Treiberkolben 30 zugeführt bzw. angeordnet.

Die verschiedenen oben beschriebenen bevorzugten Ausführungsformen des Setzgeräts 10 sind jeweils mit der dafür vorgesehenen Steuereinheit S verbunden. Die Steuereinheit S führt gemeinsam mit dem Setzgerät 10 das im Weiteren beschriebene erfindungsgemäß bevorzugte Bolzensetzverfahren aus. Dazu wird vorzugsweise der Weg des Treiberkolbens 30 über einen Wegsensor oder über den jeweils verwendeten Linearantrieb 40 erfasst und an die Steuereinheit S übertragen. Zudem ist mithilfe eines Kraftsensors oder über den durch den Linearantrieb 40 im Falle eines Servomotors gebrauchten Strom erfassbar, welche Kraft über den Treiberkolben 30 auf den Bolzen 20 aufgebracht wird.

Bezugnehmend auf die schematischen Darstellungen in den Figuren 7a und 7b werden im Folgenden die bevorzugten Ausführungsformen des Bolzensetzverfahrens beschrieben. Dieses Bolzensetzverfahren dient dem Fügen eines nagelförmigen Bolzens N. Der nagelförmige Bolzen 20 umfasst einen Kopf 2 und einen sich von der Unterseite des Kopfes 2 erstreckenden Schaft 3. Der Schaft 3 verjüngt sich an seinem kopfabgewandten Ende innerhalb eines sich in Längsrichtung erstreckenden Spitzenbereiches $4_B$ zu einer Spitze 4 oder einer spitzenähnlichen Ausgestaltung des Schafts 3. Entsprechend weist der Schaft 3 bevorzugt eine spitze, eine stumpfe, eine abgeflachte, eine abgerundete oder eine anderweitig geformte Spitze 4 auf.

Der Schaft 3 weist zwischen der Unterseite des Kopfes 2 und der Spitze 4 eine Schaftlänge auf. Der Schaft 3 hat entlang seiner Schaftlänge und bis zum Beginn des Spitzenbereichs $4_B$ einen annähernd konstanten Durchmesser.

In diesem Zusammenhang wird bevorzugt angenommen, dass auch im Bereich einer Oberflächenprofilierung des Schafts 3 der Durchmesser des Schafts 3 nur vernachlässigbar gering variiert und daher als annähernd konstant angenommen werden kann. In diesem Zusammenhang wird eine Durchmesseränderung im Längsverlauf des Schafts 3 mit der Durchmesseränderung im Spitzenbereich $4_B$ verglichen. Ist eine Durchmesseränderung in einer Profilierung des Schafts 3 deutlich kleiner als im Spitzenbereich, vorzugsweise nur 75 % davon, dann wird diese Durchmesservariation als vernachlässigbar angenommen. So erzeugt beispielsweise eine Profilierung des Schafts 3 eine Durchmesseränderung von ca. 0,1 mm bei einem Schaftdurchmesser von annähernd ≤3,5 bis 4 mm. Im Vergleich dazu verjüngt sich der Schaft 3 im Spitzenbereich $4_B$ auf annähernd 0,3 bis 0,5 mm.

In diesem Zusammenhang ist es ebenfalls bevorzugt, eine vernachlässigbare Durchmesservariation des Schafts 3 folgendermaßen abzuschätzen. Die Profilierung des Schafts 3 wird mit einer doppelten Profiltiefe tp (doppelte Einkerbtiefe) beschrieben. Diese Annahme erscheint beispielsweise dann passend, wenn die Profilierung des Schafts 3 durch einen Gewindeabschnitt gebildet wird. Man bildet nun den Quotienten aus der doppelten Profiltiefe tp (doppelte Einkerbtiefe) und dem maximalen Schaftdurchmesser ds (Durchmesser des Schaftes 3 an der dicksten Stelle). Wenn die Durchmesservariation des Schafts 4 im profilierten Bereich, also außerhalb des Spitzenbereichs $4_B$, den folgenden Zusammenhang erfüllt, dann ist die Variation des Schaftdurchmessers außerhalb des Spitzenbereichs $4_B$ vernachlässigbar:

$$0,01 \leq \frac{tp}{ds} \leq 0,65$$

. So sind beispielsweise Profiltiefen im Bereich von 0,05 mm≤tp≤1,3 mm bei einem Schaftdurchmesser im Bereich von 2,0 mm≤ds≤5,0 mm vernachlässigbar.

Der Spitzenbereich $4_B$ des Schafts 3 zeichnet sich dadurch aus, dass sich der Durchmesser des Schafts 3 mit abnehmender Entfernung zur Spitze 4 verringert, ohne dabei nochmals seinen Maximalwert zu erreichen.

In einer ersten Phase des Bolzensetzverfahrens durchdringt der Schaft 3 mit dem Spitzenbereich $4_B$ voraus die mindestens zwei Bauteile B oder das nur eine Bauteil B so weit, dass der Schaft 3 mit einem Bereich maximalen Durchmessers die mindestens zwei Bauteile B oder das nur eine Bauteil B vollständig durchdrungen hat. Dies ist anhand der in den Figuren 7a und 7b dargestellten Stufen I und II zu erkennen. Denn nach Abschluss von Stufe II hat der Spitzenbereich $4_B$ die zwei Bauteile B vollständig durchdrungen. Entsprechend hat auch der Schaft 3 mit seinem maximalen Durchmesserbereich das eine Bauteil B oder beide Bauteile B vollständig durchlaufen und dabei die beim Fügen erzeugte Bauteilöffnung entsprechend dem maximalen Schaftdurchmesser aufgeweitet.

Durch den Treiberkolben 30 auf den Bolzen 20 in einem ersten Schritt übertragene Fügeenergie ist so groß, dass der Schaft 3 vorzugsweise maximal die Fügeöffnung radial aufweitend in das Bauteil B oder die Bauteile B eindringt. Daher wird dieser erste Verfahrensschritt als Verformungsschlag bezeichnet. Dabei dringt der Schaft 3 ohne Auflage der Kopfunterseite auf dem angrenzenden Bauteil B ein. Entsprechend bleibt der Bolzen 20 mit einem Kopfüberstand zum kopfzugewandten Bauteil B in dem Bauteil B oder den Bauteilen B stecken.

Damit verrichtet der Verformungsschlag mithilfe des Schafts 3 bevorzugt die maximale Verformungsarbeit beim Erzeugen der Fügeöffnung. Für das weitere Eindringen des Bolzens 20 bis zur Kopfauflage ist somit keine oder nur noch eine vernachlässigbar geringe Verformungsarbeit in dem Bauteil B oder den Bauteilen B, bspw. durch eine oben diskutierte Profilierung des Schafts 3, sowie ein Überwinden des Reibschlusses zwischen den Bauteilen B und dem Schaft 3 erforderlich.

Nach dem Verformungsschlag wird der Bolzen 20 durch mindestens einen Reibungsschlag bis zur Auflage der Kopfunterseite auf dem benachbarten Bauteil B eingetrieben. Reibungsschlag bedeutet somit, dass dem in dem Bauteil B oder den Bauteilen B steckenden Bolzen 20 ein weiterer Energiebetrag über den Treiberkolben 30 zugeführt wird, mit dessen Hilfe der Treiberkolben 30 den Bolzen 20 vorzugsweise bis zur Kopfauflage in das Bauteil B oder die Bauteile B vollständig eindrückt. Da die Verformungsarbeit des Schafts 3 schon abgeschlossen ist, muss der Bolzen 20 mit dem Reibungsschlag nur noch den bestehenden Reibschluss an der Grenzfläche zwischen dem Schaft 3 und dem Bauteil B oder den miteinander zu verbindenden Bauteilen überwinden, bis die Kopfunterseite auf dem kopfzugewandten Bauteil aufliegt. Wird dazu der Bolzen 20 nach dem Verformungsschlag ohne Stillstand durch den Reibungsschlag weiter bewegt bzw. in das/die Bauteile gesetzt, ist lediglich die wirkende Gleitreibung zwischen Schaft 3 und Bauteilen B zu überwinden. Wird der Bolzen 20 aus der Ruhe in eine weitere Setzbewegung versetzt, muss die durch den Reibungsschlag zugeführte Energie ausreichend groß sein, um zunächst die Haftreibung und dann die Gleitreibung zwischen Schaft 3 und Bauteilen B zu überwinden.

Vorzugsweise ist nur ein Reibungsschlag zum abschließenden Herstellen der Verbindung, also zum Fügen des Bolzens 20 bis zur Kopfauflage, erforderlich.

Der Reibungsschlag überträgt im Vergleich zum Verformungsschlag einen kleineren Energiebetrag auf den Bolzen N. Entsprechend ist eine Fügegeschwindigkeit im Verformungsschlag größer als im Reibungsschlag.

Der Reibungsschlag ist in den Figuren 7a und 7b anhand des Übergangs von Stufe II zu Stufe III dargestellt. Um den Reibungsschlag zu starten, also einen weiteren Energiebetrag dem Bolzen 20 zum Herstellen der Fügeverbindung zwischen Bolzen 20 und Bauteil B zuzuführen, ist es nicht zwingend erforderlich, dass sich der Bolzen 20 in Ruhe befindet und sich nicht mehr in Fügerichtung $R_F$ bewegt. Entsprechend kann sich der Reibungsschlag an den Verformungsschlag anschließen, selbst wenn der Bolzen 20 noch in Bewegung ist.

Da die Kopfunterseite vorzugsweise mit geringer oder vernachlässigbar kleiner Überschussenergie des Bolzens 20 auf dem kopfzugewandten Bauteil B aufsetzt, ist die Lärmemission während des Fügeverfahrens relativ gering im Vergleich zu bekannten Fügeverfahren. Dies liegt gerade an im Vergleich zu bekannten Fügeverfahren niedrigen Fügegeschwindigkeiten des Bolzens N. Denn diese niedrigere Fügegeschwindigkeit im Vergleich zum Stand der Technik resultiert in eine vernachlässigbar geringe Überschussenergie, mit der die Unterseite des Kopfes 2 des Bolzens 20 auf dem kopfzugewandten Bauteil B aufsetzt.

Um dem Bolzen 20 im Verformungsschlag und im Reibungsschlag Energie zuzuführen, wird der Treiberkolben 30 vorzugsweise in Kombination mit einer zusätzlichen bevorzugten Treibermasse 31 auf eine Fügegeschwindigkeit beschleunigt. Der dazu vorzugsweise genutzte Linearmotor 40 wird durch die Steuerungseinheit S angesteuert. Während der Ansteuerung des Linearmotors 40 werden vorzugsweise der Weg s des Treiberkolbens 30 sowie eine Stromaufnahme des Linearmotors 40 oder eine äquivalente Größe bei einem antreibenden Pneumatikzylinder oder einem Hydraulikzylinder oder einem Spindeltrieb durch die Steuereinheit S erfasst.

Aufgrund der oben beschriebenen bevorzugten Ausführungsform des Setzgeräts 10 wird der Treiberkolben 30 in Kombination mit der Treiberkolbenmasse 31 beschleunigt. Um eine Überschussenergie und damit ein geräuschintensives Auftreffen des Bolzenkopfes 2 auf dem Bauteil B im Verformungsschlag zu vermeiden, wird im Verformungsschlag eine Fügegeschwindigkeit des Bolzens 20 von ≤ 4m/s, vorzugsweise ≤ 2 bis 3 m/s und am meisten bevorzugt ≤ 1 m/s verwendet.

Die im Reibungsschlag verwendete Fügegeschwindigkeit des Bolzens 20 liegt bevorzugt unter der Fügegeschwindigkeit des Verformungsschlags.

Die im Vergleich zu bekannten Hochgeschwindigkeit-Bolzensetzverfahren, in denen Fügegeschwindigkeiten von über 5 m/s und bis zu 40 m/s genutzt werden, deutlich geringeren Fügegeschwindigkeiten im Verformungsschlag und im Reibungsschlag haben niedrigere Reaktionskräfte auf den das Setzgerät 10 führenden Roboter R oder eine entsprechende Zustellvorrichtung zur Folge. Die Reaktionskraft auf den Roboter R oder die Zustellvorrichtung hängt von einer Beschleunigung des Treiberkolbens 30 mit Treibermasse 31 ab, der auf die Fügegeschwindigkeit beschleunigt werden muss. Ist die Fügegeschwindigkeit geringer als die der bekannten Verfahren, fällt dadurch bevorzugt auch die Reaktionskraft niedriger aus. Zudem sorgen die Federdämpfungssysteme zwischen Roboter R und Setzgerät 10 dafür, dass die Reaktionskraft auf den Roboter R oder die Zustellvorrichtung gedämpft und/oder verzögert wird.

Zudem ist es bevorzugt, bei der Verwendung des Linearmotors oder des Spindeltriebs oder des Pneumatikzylinders als Linearantrieb 40 den Beschleunigungsweg des Treiberkolbens 30 lang zu wählen. Je länger der Beschleunigungsweg des Treiberkolbens 30 ausfällt, umso kleiner ist die Beschleunigung des Treiberkolbens 30 zum Erreichen der Fügegeschwindigkeit und somit auch die sich daraus ergebende Reaktionskraft auf den Roboter R.

Zudem wird bevorzugt die Größe der Beschleunigung durch eine vergrößerte Beschleunigungszeit reduziert, wobei die Beschleunigungszeit aber durch den zur Verfügung stehenden Beschleunigungsweg des Linearantriebs 40 limitiert ist.

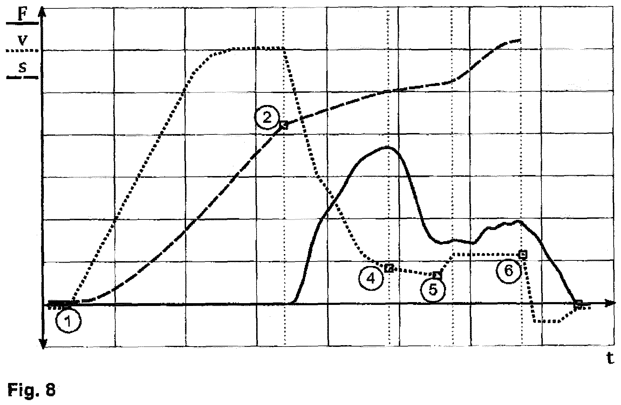

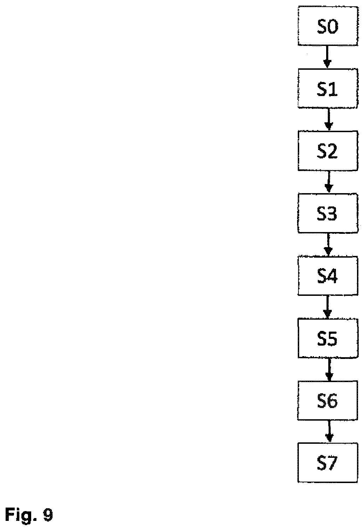

Eine erste Verfahrensalternative des Bolzensetzverfahrens wird unter Bezugnahme auf die Figuren 8 und 9 beschrieben. Es versteht sich, dass die folgende Verfahrensbeschreibung gleichermaßen für das Setzen eines Bolzens 20 in nur ein Bauteil wie in einen Stapel aus mindestens zwei Bauteilen B gilt.

Zur Festlegung des insgesamt notwendigen Energiegehaltes der Fügeverbindung ist es zweckmäßig im Vorfeld Fügeversuche durchzuführen. Als Alternative kann die Steifigkeit der Verbindungsstelle und damit die Nachgiebigkeit der zu fügenden Materialpaarung ermittelt werden. Zur Bestimmung wird eine Kalibrierfahrt ohne Fügeelement durchgeführt. Hierbei wird ein Mundstück des Setzgeräts 10 auf die miteinander zu verbindenden Bauteile B aufgesetzt und der Treiberkolben 30 wird langsam und kontrolliert unter Kraftausübung gegen die Bauteile B gefahren, sodass diese ausgelenkt wird. Die durch das Setzgerät 10 aufgebrachte Kraft und die durch die aufgebrachte Kraft erzielte Auslenkung der Bauteile B werden aufgezeichnet, sodass ein charakteristisches Nachgiebigkeitsdiagramm der Fügestelle entsteht. Aus dieser Charakteristik wird eine Voreinstellung der initialen Fügeenergie in Phase I abgeleitet.

Neben der oben beschriebenen Kalibrierfahrt ist es ebenfalls bevorzugt, die für den Verformungsschlag erforderliche Durchstoßenergie des Schafts 3 durch die Bauteile B zu berechnen oder abzuschätzen. Aus der bestimmten Durchstoßenergie ergibt sich in Kombination mit dem zu beschleunigenden Treiberkolben 30 und der Treibermasse 31 die Fügegeschwindigkeit des Treiberkolbens 30, die er auf den Bolzen 20 während des Verformungsschlags überträgt.

Nach dem Festlegen der Fügegeschwindigkeit für den Verformungsschlag (Schritt S0) wird der Treiberkolben 30 vorzugsweise mit Treibermasse 31 beginnend am Punkt 1 in Figur 8 auf die Fügegeschwindigkeit beschleunigt. Dies ist anhand der gepunkteten Kurve in Figur 8 erkennbar. Ein Plateau in der gepunkteten Kurve zeigt das Erreichen der vorgegebenen Fügegeschwindigkeit v an.

Während der Beschleunigung des Treiberkolbens 30 bewegt sich der Treiberkolben 30 in Fügerichtung und legt den Weg s (gestrichelte Linie in Figur 8) zurück. Da der Treiberkolben 30 noch nicht auf den Bolzen 20 getroffen ist, ist die durch den Treiberkolben 30 aufgebrachte Kraft 0 (siehe durchgezogene Linie in Figur 8).

An der vertikalen gepunkteten Linie und dem Punkt 2 trifft der Treiberkolben 30 auf den Bolzen N. Dies ist anhand eines Knicks in der gestrichelten Wegkurve und eines Abfalls in der Geschwindigkeitskurve erkennbar (Schritt S2). In diesem Zusammenhang gibt der Treiberkolben 30 seine kinetische Energie an den Bolzen 20 weiter, die als Durchstoßenergie den Bolzen 20 durch die Bauteile 20 treibt.

Nach dem Erkennen des Auftreffens des Treiberkolbens 30 auf den Bolzen 20 schaltet die Steuereinheit S den Linearantrieb 40 in einen bevorzugten Kinematik-Modus um. Im Kinematik-Modus bewegen sich der Treiberkolben 30 und die Treiberkolbenmasse 31 allein aufgrund der Trägheit ihrer Massen. Der Einfluss von Gewichtskraftbeiträgen zur Beschleunigung oder zum Abbremsen des Treiberkolbens 30 und der Treibermasse 31 werden ausgeglichen. Befindet sich vorzugsweise das Setzgeräte 10 in der Waagerechten, wird der Linearantrieb 40 abgeschaltet. Befindet sich das Setzgerät 10 in der Senkrechten und fügt gegen die Schwerkraft den Bolzen N, werden der Treiberkolben 30 und die Treiberkolbenmasse 31 zum Ausgleich der abbremsenden Schwerkraft zusätzlich angetrieben. Fügt das Setzgerät 10 in Richtung der Schwerkraft, werden der Treiberkolben 30 und die Treiberkolbenmasse 31 zusätzlich abgebremst (Schritt S3).

Während die auf den Bolzen 20 wirkende Kraft F mit der Zeit t zunimmt, fällt die Geschwindigkeit v des Treiberkolbens 30 weiter ab. Anhand dieser Kurvenverläufe ist erkennbar, dass die kinetische Energie des Bolzens 20 bei der Verformung des Bauteilmaterials durch den Schaft 3 umgewandelt wird. Somit wird bevorzugt ein großer Teil der kinetischen Energie des Bolzens 20 in Durchstoßenergie im Verformungsschlag umgewandelt.

Vorzugsweise erfasst während des Bolzensetzverfahrens der Wegsensor den Weg des Treiberkolbens 30. Aus der in der Steuereinheit S vorhandenen Systemzeit ist aus der Weginformation des Wegsensors die Geschwindigkeit des Treiberkolbens 30 bestimmbar. Der Weg s, die Geschwindigkeit v des Treiberkolbens 30 und die Kraft F werden vorzugsweise in Echtzeit erfasst, ausgewertet und für die Steuerung und Regelung des Bolzensetzverfahrens genutzt.

Während der Schaft 3 die Bauteile B durchdringt und abgebremst wird, wird die Abnahme der Geschwindigkeit v des Treiberkolbens 30 durch die Steuereinheit S überwacht.

Vorzugsweise wird ein Unterschreiten einer zuvor definierten Schwellengeschwindigkeit des Treiberkolbens 30 am Punkt 4 der gepunkteten Geschwindigkeitskurve erkannt. An diesem Punkt 4 hat das Eindringen des Schafts 3 in die Bauteile B den Bolzen 20 weiter abgebremst. Anhand des parallel erfassten Wegs s des Treiberkolbens 30 ist erkennbar, dass der Spitzenbereich des Schafts 3 und damit der Schaftbereich maximalen Durchmessers die Bauteile B durchdrungen hat (Schritt S4).

Daher wird im Schritt S5 ein Antreiben des Treiberkolbens 30 über den Linearantrieb 40 zugeschaltet, um den Bolzen 20 mit einer Durchtriebgeschwindigkeit im Reibungsschlag bis zur Kopfauflage auf den Bauteilen B in die Bauteile B zu fügen. (siehe auch Punkt 5 in Figur 8)

Da für das weitere Eintreiben des Bolzens 20 im Reibungsschlag im Wesentlichen nur noch die Haft- und/oder Gleitreibung zwischen dem Schaft 3 und der angreifenden Bauteiloberfläche zu überwinden ist, ist die Fügegeschwindigkeit im Reibungsschlag geringer als im Verformungsschlag. Dies zeigt auch der Verlauf der Geschwindigkeitskurve in Figur 8. Vorzugsweise wird während des Verformungsschlags der Bolzen 20 auf eine Durchtriebgeschwindigkeit von $\leq 85\,\%$ der anfänglichen Fügegeschwindigkeit des Verformungsschlags, weiter bevorzugt von $\leq 25\,\%$ der anfänglichen Fügegeschwindigkeit des Verformungsschlags abgebremst.

Zudem ist die für den Reibungsschlag erforderliche Energie bevorzugt durch den Linearantrieb 40 direkt generierbar, ohne dass der Treiberkolben 30 und die Treiberkolbenmasse 31 zunächst auf eine bestimmte Geschwindigkeit beschleunigt werden müssen.

Im weiteren Verlauf des Reibungsschlags wird vorzugsweise eine Stromaufnahme oder allgemein ein Energiebedarf des Linearantriebs 40 erfasst. Sobald die Energieaufnahme einen Schwellenwert überschreitet, erkennt man daran die Kopfauflage des Bolzens 20 (Schritt S6).

Anhand des Wegsignals und des Geschwindigkeitssignals ist dies an einem Abfall des jeweiligen Signals erkennbar (Punkt 6 in Figur 8). Daher wird im Schritt S7 der Treiberkolben 30 in seine Ausgangsposition zurückbewegt.

Gemäß einer weiteren Verfahrensalternative wird die anfängliche Fügegeschwindigkeit des Verformungsschlags derart eingestellt, dass kein zusätzlicher Reibungsschlag erforderlich ist. Entsprechend ist die durch den Treiberkolben 30 und die Treiberkolbenmasse 31 auf den Bolzen 20 übertragene kinetische Energie genau ausreichend, um den Schaft 3 bis zur Kopfauflage durch die Bauteile B zu treiben. In diesem Zusammenhang ist es erfindungsgemäß bevorzugt, dass die Kopfunterseite des Bolzens 20 ohne Überschussenergie oder mit vernachlässigbar geringer Überschussenergie auf das kopfzugewandte Bauteil B trifft.

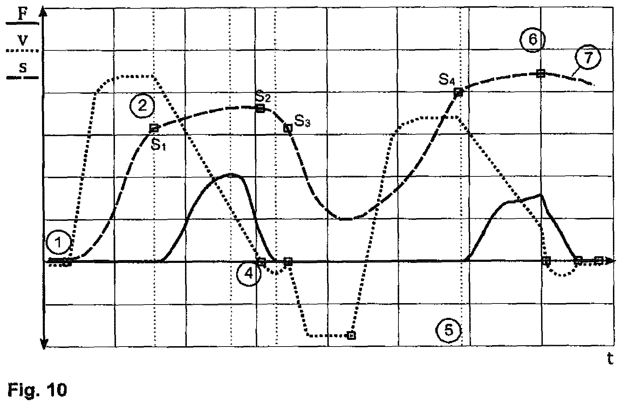

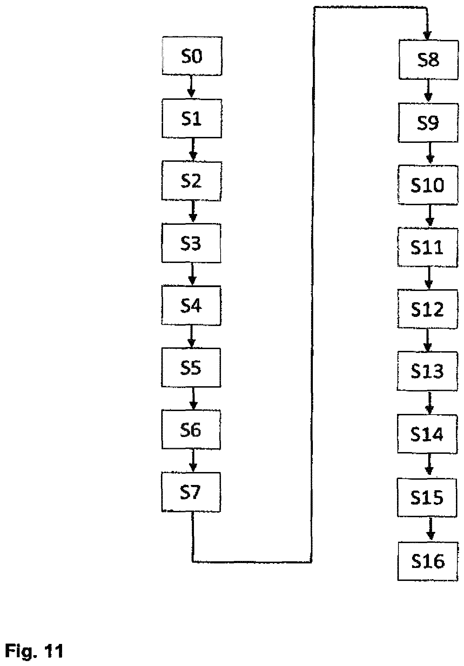

Anhand der Figuren 10 und 11 wird eine weitere bevorzugte Ausführungsform des erfindungsgemäßen Bolzensetzverfahrens erläutert. Die ersten Schritte S0 bis S2 laufen auf die gleiche Weise ab, wie es oben bezugnehmend auf die Figuren 8 und 9 beschrieben worden ist. Entsprechend wird der Treiberkolben 30 und die Treiberkolbenmasse 31 beginnend am Punkt 1 in Figur 10 auf die vorgegebene Fügeenergie im Verformungsschlag bzw. Verformungsschritt und die damit verbundene kinetische Energie gebracht. Zum Zeitpunkt von Punkt 2 trifft der Treiberkolben 30 auf den Bolzen 20 und der Treiberkolben 30 wird durch die stattfindende Verformungsarbeit des Schafts 3 in den Bauteilen B abgebremst.

Wenn im Punkt 2 der Treiberkolben 30 auf den Bolzen trifft, wird der entsprechende Weg-Wert $s_1$ erfasst und gespeichert.

Anhand der Geschwindigkeitsdaten (siehe Geschwindigkeitskurve in Figur 10) wird erfasst, wann der Treiberkolben 30 zum Stillstand gekommen ist. Die Geschwindigkeitskurve schneidet im Punkt 4 die Zeitachse, was gleichbedeutend damit ist, dass sich bevorzugt elastische Verformungen der Bauteile B ausgleichen und eine begrenzte Bewegung des Treiberkolbens 30 entgegen der Fügerichtung auslösen.

Bevorzugt wird im Punkt 4, also bei Stillstand von Treiberkolben 30 und Bolzen N, der Weg $s_2$ erfasst (Schritt S4 in Fig. 11).

Ohne den Treiberkolben 30 anzutreiben, wird im Schritt S5 abgewartet, dass sich elastische Verformungen in den Bauteilen B und dem Setzgerät 10 ausgleichen. Dieses Rückfedern der Bauteile B versetzt auch den Treiberkolben 30 entgegen der Fügerichtung, was anhand eines Weg-Werts $s_3$ gespeichert wird (Schritt S5).

Im bevorzugten Schritt S6 wird aus der Differenz $s_{31}$ der Weg-Werte $s_3$ minus $s_1$ der Kopfüberstand des Bolzens 20 zum benachbarten Bauteil B bestimmt. Aus der Differenz der Weg-Werte $s_{23} = s_2 - s_3$ geht eine elastische Verformung der Bauteile B hervor.

Vorzugsweise wurde anhand der oben beschriebenen Testversuche zur Durchstoßenergie einer herzustellenden Bauteilverbindung ein Kennfeld ermittelt. Dieses Kennfeld gibt an, mit welcher Fügegeschwindigkeit und einer damit verbundenen kinetischen Energie des Treiberkolbens 30 ein Bolzen 20 mit einem bestimmten Kopfüberstand eingetrieben werden muss, um eine Kopfauflage des Bolzens 20 zu erzielen.

Die bevorzugt ermittelte elastische Verformung in den Bauteilen B gemäß dem Weg $s_{23}$ drückt aus, wie viel mechanische Energie im bevorstehenden Reibungsschlag wieder in den Bauteilen B für die Verbindung ungenutzt gespeichert werden wird. Der ermittelte Kopfüberstand $s_{31}$ legt fest, wie viel kinetische Energie des Treiberkolbens 30 und der Treiberkolbenmasse 31 für die Verbindung erforderlich ist, um den Bolzen 20 in eine Kopfauflage auf den Bauteilen B zu fügen. Daher wird vorzugsweise im Schritt S7 aus dem Kennfeld ermittelt, wie viel Energie über den Treiberkolben 30 und die Treiberkolbenmasse 31 mindestens auf den Bolzen 20 übertragen werden muss, um die Verbindung herzustellen. Dabei wird bevorzugt für den erforderlichen Energiebetrag eine Fügegeschwindigkeit im Kennfeld angegeben, auf die der Treiberkolben 30 und die Treiberkolbenmasse 31 in Abhängigkeit von ihrer Masse zu beschleunigen sind. Es ist ebenfalls bevorzugt, im Kennfeld anzugeben, aus welcher Rückzugsposition der Treiberkolben 30 und die Treiberkolbenmasse 31 erneut zu beschleunigen sind, um den Bolzen 20 abschließend und vollständig im Reibungsschlag einzutreiben.

Vorzugsweise wird im Schritt S8 der Treiberkolben 30 in eine Rückzugsposition entgegen der Fügerichtung $R_F$ bewegt und von dort beschleunigt.

Im Schritt S9 erreicht der Treiberkolben 30 mit der Treiberkolbenmasse 31 bevorzugt eine dritte Fügegeschwindigkeit. Die dritte Fügegeschwindigkeit entspricht in Kombination mit dem Treiberkolben 30 und der Treiberkolbenmasse 31 einer kinetischen Energie, die ausreichend groß ist, um den Bolzen 20 trotz der elastischen Verformung der Bauteile B bis zur Kopfauflage in die Bauteile B zu fügen.

Nachdem der Treiberkolben 30 mit Treiberkolbenmasse 31 aus der Rückzugsposition beschleunigt worden ist, d. h. die Geschwindigkeitskurve in Figur 10 positive Werte zeigt, trifft der Treiberkolben 30 auf den Bolzen 20 mit Kopfüberstand. Dieser Auftreffpunkt wird als Wegsignal $s_4$ des Treiberkolbens 30 erfasst und gespeichert. Er befindet sich an der vertikalen gepunkteten Linie gekennzeichnet durch 5. (Schritt S10).

Nach dem Auftreffen des Treiberkolbens 30 auf dem Bolzen 20 schaltet die Steuereinheit S wieder um auf den Kinematik-Modus (siehe oben). Entsprechend wird der Treiberkolben 30 nur noch aufgrund der Trägheit seiner Masse bewegt und störende Schwerkrafteinflüsse durch die Raumlage des Setzgeräts 10 werden ausgeglichen (Schritt S11).

Nach dem Umschalten in den Kinematik-Modus werden der Bolzen 20 und der Treiberkolben 30 durch Reibungsverluste zwischen dem Schaft 3 und den Bauteilen B abgebremst. Entsprechend nimmt die Geschwindigkeit v des Treiberkolbens ab. Ein zum gleichen Zeitpunkt erkennbarer weiterer Abfall in der Geschwindigkeits- und der Kraftkurve am Zeitpunkt 6 signalisiert das Aufsetzen des Kopfes 2 auf dem Bauteil B (Schritt S12).

Im nachfolgenden bevorzugten Schritt S13 wird bei Stillstand des Treiberkolbens 30 der Weg-Wert $s_6$ erfasst.

Im darauffolgenden Schritt S14 gleichen sich elastische Verformungen der Bauteile B aus, was an den negativen Geschwindigkeitswerten in der Geschwindigkeitskurve und der fallenden Wegkurve erkennbar ist. Haben die elastischen Ausgleichsbewegungen im Schritt S14 den Treiberkolben 30 entgegen der Fügerichtung $R_F$ versetzt, wird der Weg-Wert des Treiberkolbens 30 als $s_7$ gespeichert.

Im Schritt S15 wird vorzugsweise überprüft, ob die gewünschte Kopfauflage erzielt worden ist. Zu diesem Zweck werden der Wert $s_{74}=s_7-s_4$ als Kopfüberstand und der Wert $s_{57}=s_5-s_7$ als elastische Verformung ermittelt.

Sofern diese Werte die Verbindung als in Ordnung bestätigen, wird der Setzvorgang beendet.

6. Bezugszeichenliste

| | |
|---|---|
| R | Industrieroboter oder Zustellvorrichtung |
| B | Bauteil |
| $R_F$ | Fügerichtung |
| $F_R$ | Reaktionskraft |
| $P_B$ | Bearbeitungsimpuls |
| v | Geschwindigkeit |
| s | Weg |
| F | Kraft |
| N | nagelförmiger Bolzen |
| 2 | Kopf |
| 3 | Schaft |
| 4 | Spitze |
| $4_B$ | Spitzenbereich |
| 10, 10', 10" | Setzgerät |
| 12 | Befestigungsfuß |
| 14 | Drehachse |
| 16 | Roboterarm |
| 18 | Funktionsende |
| 20 | nagelförmiger Bolzen |
| 30 | Treiberkolben |
| 31 | Treiberkolbenmasse |
| 32 | Niederhalter |
| 33 | Spindel |
| 34 | Führung |
| 35 | Spindeltrieb |
| 36 | Niederhalterfeder |
| 37 | Führung |
| 38 | Rückhubdämpfer |
| 40 | Pneumatikzylinder |
| 41 | Rückwand |
| 42 | pneumatischer Kolben |
| 43 | Magnetstab |
| 44 | Masse |
| 45 | Führung |
| 46 | Feder |
| 47 | Umrichter |
| 48 | Dämpfer |
| 60 | Spannvorrichtung |

**Patentansprüche**

1. Ein Bolzensetzverfahren eines nagelförmigen Bolzens (20) mit einem Kopf (2) und einem sich davon erstreckenden verjüngend auslaufenden Schaft (3) in mindestens ein Bauteil (B), vorzugsweise einen Stapel aus mindestens zwei übereinander angeordneten Bauteilen, aus Metall und/oder Kunststoff, bei dem der Bolzen (20) annähernd drehungsfrei mit einer geradlinigen Setzbewegung zumindest zweistufig in das Bauteil (B) gesetzt wird, wobei das Bolzensetzverfahren den folgenden Schritt aufweist:

   a. Fügen des Bolzens (20) in das Bauteil (B) mit einem Verformungsschlag, bei dem der Bolzen (20) eine erste Fügegeschwindigkeit von ≤4 m/s erreicht und der Schaft (3) mit einem Bereich maximalen Durchmessers bezogen auf eine Schaftlänge das mindestens eine Bauteil (B) vollständig durchdringt, ohne dass eine Unterseite des Kopfes (2) auf dem mindestens einen Bauteil (B), insbesondere einem kopfzugewandten Bauteil, aufliegt, **dadurch gekennzeichnet, dass** das Bolzensetzverfahren den folgenden Schritt aufweist:
   b. nach dem Verformungsschlag Eintreiben des Bolzens (20) in das Bauteil (B) bis zu einer Kopfauflage der Unterseite des Kopfes (2) auf dem mindestens einen Bauteil (B), insbesondere dem kopfzugewandten Bauteil, durch mindestens einen Reibungsschlag, mit dem ein Reibschluss zwischen dem Schaft (3) und dem mindestens einen Bauteil (B) überwunden wird und bei dem der Bolzen (20) eine zweite Fügegeschwindigkeit kleiner als die erste Fügegeschwindigkeit erreicht.

2. Das Bolzensetzverfahren gemäß Patentanspruch 1, in welchem der Bolzen (20) mit einem Treiberkolben (30) mit einer Treiberkolbenmasse (31) gefügt wird, die mit einer ersten Beschleunigung beschleunigt auf die erste Fügegeschwindigkeit eine kinetische Energie des Verformungsschlags festgelegt, sodass die Unterseite des Kopfes (2) in einem Abstand zum benachbarten Bauteil (B) allein aufgrund des Verformungsschlags angeordnet ist.

3. Das Bolzensetzverfahren gemäß Patentanspruch 1 oder 2, in welchem der Treiberkolben (30) dämpfend federvorgespannt gegen eine Roboterhand angeordnet ist und der Treiberkolben (30) mit einem Linearantrieb in Form eines Servo-Linearmotors, eines Hydraulikzylinders, eines pneumatischen Zylinders (40) oder eines Servomotors mit Getriebeglied angetrieben wird, wobei während der geradlinigen Setzbewegung des Treiberkolbens (30) zumindest eine der folgenden Größen: ein Weg (s), eine Geschwindigkeit (v), eine Kraft (F) des Treiberkolbens (30) bestimmt werden.

4. Das Bolzensetzverfahren gemäß Patentanspruch 3, wobei der Treiberkolben (30) angetrieben durch den Linearantrieb auf die erste Fügegeschwindigkeit beschleunigt wird, ein Auftreffen des Treiberkolbens (30) auf den Bolzen (20) erfasst wird, insbesondere durch Auswerten eines Wegsignals des Treiberkolbens (30) in Abhängigkeit von der Zeit, und danach das Antreiben des Treiberkolbens (30) abgeschaltet wird.

5. Das Bolzensetzverfahren gemäß Patentanspruch 4, wobei während des Verformungsschlags

> der Bolzen (20) durch Verformungsarbeit des Bolzens (20) während eines Eindringens des Schafts (3) in das mindestens eine Bauteil (B) auf eine Durchtreibgeschwindigkeit abgebremst wird, die ≤ 85 % der ersten Fügegeschwindigkeit ist, und
> erneutes Antreiben des Treiberkolbens (30) mit dem Linearantrieb mit der zweiten Fügegeschwindigkeit im Reibungsschlag, die kleiner oder gleich der Durchtreibgeschwindigkeit ist.

6. Das Bolzensetzverfahren gemäß Patentanspruch 5, mit dem weiteren Schritt:

> Erfassen der Kopfauflage des Bolzens (20) während des Reibungsschlags durch Auswerten des Wegs (s) und/oder der Geschwindigkeit (v) des Treiberkolbens (30) und
> Beenden des Antreibens des Treiberkolbens (30) im Reibungsschlag.

7. Das Bolzensetzverfahren gemäß Patentanspruch 4, wobei während des Verformungsschlags der Bolzen (20) durch Verformungsarbeit in den Bauteilen (B) vollständig abgebremst wird,

> danach Entfernen des Treiberkolbens (30) vom Bolzen (20) in eine Rückzugsposition und
> Beschleunigen des Treiberkolbens (30) aus der Rückzugsposition auf eine dritte Fügegeschwindigkeit, mit der der Treiberkolben (30) im Reibungsschlag den Bolzen (20) zum Erreichen der Kopfauflage antreibt und die ≤ 85 % der ersten Fügegeschwindigkeit ist, und
> Abschalten des Antreibens des Treiberkolbens (30) nach erfasstem Auftreffen des Treiberkolbens (30) auf dem Bolzen (20).

8. Das Bolzensetzverfahren gemäß Patentanspruch 7, mit dem weiteren Schritt:

> Ermitteln eines Kopfüberstands des Bolzens (20) nach Abschluss des Verformungsschlags und
> Bestimmen der dritten Fügegeschwindigkeit des Treiberkolbens (30) anhand des Kopfüberstands, insbesondere auf Grundlage einer fügeparameterspezifischen Kennwerttabelle für Fügegeschwindigkeiten in Abhängigkeit vom Kopfüberstand.

9. Ein Setzgerät (10; 10'; 10"), mit dem annähernd drehungsfrei ein nagelförmiger Bolzen (20) in einer geradlinigen Setzbewegung in mindestens ein Bauteil (B), insbesondere einen Stapel aus mindestens zwei übereinander angeordneten Bauteilen, zumindest zweistufig setzbar ist, wobei das Setzgerät (10; 10'; 10") aufweist:

> a. einen durch einen Linearantrieb angetriebenen und geradlinig drehungsfrei bewegten Treiberkolben (30) mit einer Treibermasse (31), wobei mit dem Treiberkolben (30) der Bolzen (20) gesetzt wird, **dadurch gekennzeichnet, dass** das Setzgerät (10; 10'; 10") die folgenden Merkmale aufweist:
> b. einen Schlitten, auf dem der Linearantrieb mit dem Treiberkolben (30) angeordnet ist, wobei der Schlitten gegen eine Dämpfungseinrichtung bewegbar ist, insbesondere in einer Befestigung an einer Roboterhand eines Industrieroboters (R), und
> c. eine elektronische Steuereinheit (S), die angepasst ist, um das Setzgerät (10; 10'; 10") gemäß dem Bolzensetzverfahren nach einem der vorhergehenden Patentansprüche anzusteuern,

10. Das Setzgerät (10; 10'; 10") gemäß Patentanspruch 9, mit dessen Treiberkolben (30) mit einer ersten Fügegeschwindigkeit von ≤ 4 m/s ein Bolzen (20) setzbar ist.

11. Das Setzgerät (10; 10'; 10") gemäß Patentanspruch 9 oder 10, dessen Treiberkolben (30) auf eine vorbestimmte Fügegeschwindigkeit über eine Länge eines vorbestimmten Beschleunigungswegs beschleunigbar ist, wobei eine Reaktionskraft ($F_R$) auf eine das Setzgerät (10; 10'; 10") tragende Zustellvorrichtung oder einen Roboter durch eine Größe der Fügegeschwindigkeit und/oder die Länge des Beschleunigungswegs des Treiberkolbens (30) einstellbar ist.

12. Das Setzgerät (10; 10'; 10") gemäß einem der Patentansprüche 9 bis 11, in dem der Linearantrieb ein Servo-Linearmotor, ein Hydraulikzylinder, ein pneumatischer Zylinder (40) oder ein Servomotor mit Getriebeglied ist.

13. Das Setzgerät (10; 10'; 10") gemäß einem der Patentansprüche 9 bis 12, in dem mindestens ein Sensor am Treiberkolben (30) vorgesehen ist, um einen Weg (s), eine Geschwindigkeit (v) und/oder eine Kraft (F) des Treiberkolbens (30) zu ermitteln.

14. Das Setzgerät (10; 10'; 10") gemäß Patentanspruch 13, in dem die elektronische Steuereinheit (S) in situ den Fügevorgang erfasst und aufgrund der erfassten Daten den Fügevorgang steuert.

## Claims

1. A bolt setting method of a nail-shaped bolt (20) with a head (2) and a shaft (3) extending from there, ending in a tapered manner into at least one component (B), preferably into a stack of at least two components arranged upon each other, out of metal and/or plastic material, with which the bolt (20) is set into the component (B) nearly rotation-free with a straight-lined setting movement with at least two steps, wherein the bolt setting method includes the following steps:

   a. joining the bolt (20) into the component (B) with a deforming stroke during which the bolt (20) reaches a first joining speed of ≤4 m/s and the shaft (3) completely penetrates the at least one component (B) with a portion of a maximum diameter with respect to a shaft length, without a bottom side of the head (2) abutting the at least one component (B), in particular a component facing the head, **characterized in that** the bolt setting method includes the following step:
   b. after the deforming stroke, driving the bolt (20) into the component (B) until a head abutment of the bottom side of the head (2) on the at least one component (B), in particular the component facing the head, by at least one friction stroke with which a frictional connection between the shaft (3) and the at least one component (B) is overcome and with which the bolt (20) reaches a second joining speed that is smaller than the first joining speed.

2. The bolt setting method according to claim 1, in which the bolt (20) is joined with a driver piston (30) with a driver piston mass (31), which determines a kinetic energy of the deforming stroke with a first acceleration accelerated to the first joining speed, so that the bottom side of the head (2) is arranged at a distance to the adjacent component (B) due to the deforming stroke alone.

3. The bolt setting method according to claim 1 or 2, in which the driver piston (30) is arranged in a dampening, spring-pretensioned manner against a robot hand and the driver piston (30) is driven with a linear drive in the form of a servo linear motor, an hydraulic cylinder, a pneumatic cylinder (40) or a servo motor with transmission element, wherein during the straight-lined setting movement of the driver piston (30), at least one of the following sizes is determined: a path (s), a speed (v), a force (F) of the driver piston (30).

4. The bolt setting method according to claim 3, wherein the driver piston (30), driven by the linear drive, is accelerated to the first joining speed, an encountering of the driver piston (30) on the bolt (20) is detected, in particular by evaluating a path signal of the driver piston (30) depending on the time and subsequently, the driving of the driver piston (30) is switched off.

5. The bolt setting method according to claim 4, wherein during the deforming stroke

   the bolt (20) is decelerated by work of deformation of the bolt (20) during a penetrating of the shaft (3) into the at least one component (B) to a penetration speed, which is ≤ 85% of the first joining speed, and
   re-driving of the driver piston (30) with the linear drive with the second joining speed in the friction stroke that is smaller than or equal to the penetration speed.

6. The bolt setting method according to claim 5, with the further step:

   detecting the head abutment of the bolt (20) during the friction stroke by evaluating the path (s) and/or speed (v) of the driver piston (30) and finishing of the driving of the driver piston (30) in the friction stroke.

7. The bolt setting method according to claim 4, wherein the bolt (20) is completely decelerated during the deforming stroke by work of deformation in the components (B),

   subsequently, removing of the driver piston (30) from the bolt (20) into a retreat position and accelerating of the driver piston (30) from the retreat position to a third joining speed, with which in the friction stroke, the driver piston (30) drives the bolt (20) for reaching the head abutment and which is ≤ 85% of the first joining speed, and
   switching-off of the driving of the driver piston (30) after detected encountering of the driver piston (30) on the bolt (20).

8. The bolt setting method according to claim 7, with the further step:

   determining a head projection of the bolt (20) after termination of the deforming stroke and determining the third joining speed of the driver piston (30) based on the head projection, particularly based on a joining parameter specific characteristic table for joining speeds depending on the head projection.

9. A setting device (10; 10'; 10") with which a nail-shaped bolt (20) is settable nearly rotation free with a straight-lined setting movement into at least one component (B), in particular a stack of at least two components arranged upon each other with at least two steps, wherein the setting device (10; 10'; 10") includes:

a. a driver piston (30) with a driver mass (31) being driven by a linear drive and moved in a straight-lined, rotation free manner, wherein the bolt (20) is set with the driver piston (30), **characterized in that** the setting device (10; 10'; 10") includes the following features:

b. a slider on which the linear drive with the driver piston (30) is arranged, wherein the slider is movable against a dampening device, in particular in a fastening at a robot hand of an industrial robot (R), and

c. an electronic control unit (S) which is adapted to control the setting device (10; 10'; 10") according to the bolt setting method according to one of the preceding claims.

10. The setting device (10; 10'; 10") according to claim 9, with the driver piston (30) of which a bolt (20) is settable with a first joining speed of $\leq$ 4m/s.

11. The setting device (10; 10'; 10") according to claim 9 or 10, the driver piston (30) of which is accelerable to a predetermined joining speed over a length of a predetermined acceleration path, wherein a reaction force ($F_R$) onto a delivery appliance carrying the setting device (10; 10'; 10") or onto a robot is adjustable by a size of the joining speed and/or the length of the acceleration path of the driver piston (30).

12. The setting device (10; 10'; 10") according to one of the claims 9 to 11, in which the linear drive is a servo linear motor, a hydraulic cylinder, a pneumatic cylinder (40) or a servo motor with transmission element.

13. The setting device (10; 10'; 10") according to one of the claims 9 to 12, in which at least one sensor is provided at the driver piston (30) in order to determine a path (s), a speed (v) and/or a force (F) of the driver piston (30).

14. The setting device (10; 10'; 10") according to claim 13, in which the electronic control unit (S) detects the joining method in situ and controls the joining method due to the detected data.

## Revendications

1. Procédé de pose de boulon d'un boulon en forme de clou (20) avec une tête (2) et une tige (3) effilée s'étendant à partir de celle-ci dans au moins un composant (B), de préférence une pile constituée d'au moins deux composants disposés l'un sur l'autre, en métal et/ou en plastique, dans lequel le boulon (20) est posé en au moins deux étapes quasiment sans rotation selon un mouvement de pose rectiligne dans le composant (B), le procédé de pose de boulon présentant les étapes suivantes :

a. insertion du boulon (20) dans le composant (B) avec une frappe de déformation, avec lequel le boulon (20) atteint une première vitesse d'insertion de $\leq$ 4 m/s et la tige (3) traverse entièrement l'au moins un composant (B) avec une zone à diamètre maximal par rapport à une longueur de tige, sans qu'une face inférieure de la tête (2) ne repose sur l'au moins un composant (B), en particulier un composant tourné vers la tête, **caractérisé en ce que** le procédé de pose de boulon présente l'étape suivante :
b. après la frappe de déformation, enfoncement du boulon (20) dans le composant (B) jusqu'à un appui de tête de la face inférieure de la tête (2) sur l'au moins un composant (B), en particulier sur le composant tourné vers la tête, par au moins une frappe de friction permettant de surmonter une liaison par friction entre la tige (3) et l'au moins un composant (B) et où le boulon (20) atteint une deuxième vitesse d'insertion inférieure à la première vitesse d'insertion.

2. Procédé de pose de boulon selon la revendication 1, dans lequel le boulon (20) est assemblé avec un piston d'entraînement (30) doté d'une masse de piston d'entraînement (31), laquelle définit une énergie cinétique de la frappe de déformation avec une première accélération accélérée à la première vitesse d'insertion, de sorte que la face inférieure de la tête (2) est disposée à une distance du composant (B) voisin, du seul fait de la frappe de déformation.

3. Procédé de pose de boulon selon la revendication 1 ou 2, dans lequel le piston d'entraînement (30) est disposé contre une main de robot en étant précontraint par ressort de façon amortie et le piston d'entraînement (30) est actionné à l'aide d'un actionneur linéaire sous la forme d'un servomoteur linéaire, d'un cylindre hydraulique, d'un cylindre pneumatique (40) ou d'un servomoteur doté d'un organe de transmission, dans lequel, pendant le mouvement de pose rectiligne du piston d'entraînement (30), l'une au moins des grandeurs suivantes est déterminée : une course (s), une vitesse (v), une force (F) du piston d'entraînement (30).

**4.** Procédé de pose de boulon selon la revendication 3, dans lequel le piston d'entraînement (30) entraîné par l'actionneur linéaire est accéléré à la première vitesse d'insertion, un impact du piston d'entraînement (30) sur le boulon (20) est détecté, en particulier par l'évaluation d'un signal de course du piston d'entraînement (30) en fonction du temps, puis l'actionnement du piston d'entraînement (30) est arrêté.

**5.** Procédé de pose de boulon selon la revendication 4, dans lequel, pendant la frappe de déformation,

le boulon (20) est ralenti à une vitesse de passage ≤ 85% de la première vitesse d'insertion, par le travail de déformation du boulon (20), pendant une pénétration de la tige (3) dans l'au moins un composant (B), et
le piston d'entraînement (30) est de nouveau actionné à l'aide de l'actionneur linéaire avec la deuxième vitesse d'insertion de la frappe de friction, laquelle est inférieure ou égale à la vitesse de passage.

**6.** Procédé de pose de boulon selon la revendication 5, comprenant l'étape supplémentaire suivante :

détection de l'appui de tête du boulon (20) pendant la frappe de friction par évaluation de la course (s) et/ou de la vitesse (v) du piston d'entraînement (30) et
achèvement de l'actionnement du piston d'entraînement (30) avec la frappe de friction.

**7.** Procédé de pose de boulon selon la revendication 4, dans lequel, pendant la frappe de déformation, le boulon (20) est complètement ralenti dans les composants (B) par le travail de déformation,

puis le piston d'entraînement (30) est éloigné du boulon (20) vers une position de retrait et le piston d'entraînement (30) est accéléré à partir de la position de retrait à une troisième vitesse d'insertion, avec laquelle le piston d'entraînement (30) entraîne le boulon (20) avec la frappe de friction pour atteindre l'appui de tête et laquelle est ≤ 85% de la première vitesse d'insertion, et arrêt de l'actionnement du piston d'entraînement (30) après l'impact du piston d'entraînement (30) sur le boulon (20).

**8.** Procédé de pose de boulon selon la revendication 7, comprenant l'étape supplémentaire suivante :

détection d'une projection de tête du boulon (20) à la fin de la frappe de déformation et
détermination de la troisième vitesse d'insertion du piston d'entraînement (30) à l'aide de la projection de tête, en particulier sur la base d'une table de valeurs caractéristiques spécifique aux paramètres d'insertion pour des vitesses d'insertion en fonction de la projection de tête.

**9.** Appareil de pose (10; 10' ; 10"), avec lequel un boulon (20) en forme de clou peut être posé au moins en deux étapes quasiment sans rotation selon un mouvement de pose rectiligne dans au moins un composant (B), en particulier une pile constituée d'au moins deux composants disposés l'un sur l'autre, l'appareil de pose (10 ; 10' ; 10") présentant :

a. un piston d'entraînement (30) actionné par un actionnement linéaire et déplacé sans rotation de façon rectiligne, avec une masse d'entraînement (31), le boulon (20) étant posé à l'aide du piston d'entraînement (30), **caractérisé en ce que** l'appareil de pose (10 ; 10' ; 10") présente les éléments suivants :
b. un chariot, sur lequel est disposé l'actionnement linéaire avec le piston d'entraînement (30), le chariot pouvant être déplacé contre un dispositif d'amortissement, en particulier dans une fixation sur une main de robot d'un robot industriel (R), et
c. une unité de commande électronique (S) adaptée pour commander l'appareil de pose (10; 10'; 10") conformément au procédé de pose de boulon selon l'une des revendications précédentes.

**10.** Appareil de pose (10 ; 10' ; 10") selon la revendication 9, dont le piston d'entraînement (30) permet de poser un boulon (20) avec une première vitesse d'insertion ≤ 4 m/s.

**11.** Appareil de pose (10; 10'; 10") selon la revendication 9 ou 10, dont le piston d'entraînement (30) peut être accéléré à une vitesse d'insertion prédéterminée sur une longueur d'une course d'accélération prédéterminée, dans lequel une force de réaction ($F_R$) sur un système d'avance ou un robot portant l'appareil de pose (10 ; 10' ; 10") peut être réglée par une grandeur de la vitesse d'insertion et/ou la longueur de la course d'accélération du piston d'entraînement (30) peut être réglée.

**12.** Appareil de pose (10; 10' ; 10") selon l'une des revendications 9 à 11, dans lequel l'actionnement linéaire est un servomoteur linéaire, un cylindre hydraulique, un cylindre pneumatique (40) ou un servomoteur doté d'un organe de transmission.

**13.** Appareil de pose (10; 10' ; 10") selon l'une des revendications 9 à 12, dans lequel au moins un capteur est prévu sur le piston d'entraînement (30), pour la détermination d'une course (s), d'une vitesse (v), et/ou d'une force (F) du piston d'entraînement (30).

**14.** Appareil de pose (10; 10' ; 10") selon la revendication 13, dans lequel l'unité de commande électronique (S) détecte l'opération d'insertion in situ et commande l'opération d'insertion sur la base des données détectées.

**Fig. 1**

**Fig. 2**

**Fig. 3**

**Fig. 4**

**Fig. 5**

**Fig. 6**

**Fig. 7 a**

**Fig. 7 b**

**Fig. 8**

**Fig. 9**

**Fig. 10**

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014007553 A1